(19) Europäisches Patentamt
European Patent Office
Office européen des brevets

(11) **EP 4 572 395 A1**

(12) **EUROPEAN PATENT APPLICATION**
published in accordance with Art. 153(4) EPC

(43) Date of publication:
**18.06.2025 Bulletin 2025/25**

(21) Application number: **23851655.3**

(22) Date of filing: **02.08.2023**

(51) International Patent Classification (IPC):
**H04W 28/24** (2009.01)

(52) Cooperative Patent Classification (CPC):
**H04W 24/10; H04W 28/24**

(86) International application number:
**PCT/CN2023/110696**

(87) International publication number:
**WO 2024/032434 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.08.2022 CN 202210951519**

(71) Applicants:
• **CHINA MOBILE COMMUNICATION CO., LTD RESEARCH INSTITUTE**
**Beijing 100053 (CN)**

• **CHINA MOBILE COMMUNICATIONS GROUP CO., LTD.**
**Beijing 100032 (CN)**

(72) Inventor: **CHAI, Li**
**Beijing 100032 (CN)**

(74) Representative: **Murgitroyd & Company**
**165-169 Scotland Street**
**Glasgow G5 8PL (GB)**

(54) **SERVICE CONTROL METHOD AND APPARATUS, COMMUNICATION DEVICE, AND READABLE STORAGE MEDIUM**

(57)  The present disclosure provides a service control method and device, communication equipment and readable storage medium, which belongs to the field of communication technology. The service control method of the embodiment of the present application includes: obtaining first information of a first service sent by a second network node or a user equipment (UE), where the first information includes: first QoS indicator information, and/or second QoS indicator information and third QoS indicator information; sending second information of the first service to the second network node and/or the UE. The second information includes at least one of the following: fourth QoS indicator information; fifth QoS indicator information; sixth QoS indicator information; and seventh QoS indicator information. The first QoS indicator information includes QoS indicator information from the UE to the second network node and from the second network node to the UE.

```
┌────────────────────────────────────────────────────────────────┐
│ obtaining first information of a first service sent by a second │  11
│        network node or a user equipment (UE)                   │
└────────────────────────────────────────────────────────────────┘
                              │
                              ▼
┌────────────────────────────────────────────────────────────────┐
│ sending second information of the first service to a second     │  12
│          network node and/or UE                                 │
└────────────────────────────────────────────────────────────────┘
```

FIG. 1

**Description**

**CROSS-REFERENCE TO RELATED APPLICATION**

The present application is filed based on and claims the priority of Chinese Application No. 202210951519.2 filed on August 9, 2022, the disclosure of which are incorporated in their entireties by reference herein.

**TECHNICAL FIELD**

The present disclosure relates to the field of communication technologies, and in particular, to a service control method and device, communication equipment and readable storage medium.

**BACKGROUND**

For new low-latency interactive services such as extended reality (XR), uplink and downlink services have strict coupling relationships in terms of time, quality of service (QoS), etc. For example, in order to achieve a good real-time interactive experience for single-user strongly interactive XR services (such as virtual reality (VR) games, VR social networking), it requires a downlink bandwidth of at least 100Mbps, an uplink bandwidth of at least 20Mbps, and a two-way latency for motion to photon (MTP) being no more than 15ms. However, the uplink delay requirements and downlink delay requirements of the round trip transmission (RTT) of XR services are unbalanced and variable. Meanwhile, in order to provide users with an immersive experience, real-time interactive XR/media services require extremely low round-trip latency, otherwise it will cause dizziness to the user. In this case, how to control end-to-end QoS indicators of interactive services is an urgent problem that needs to be solved.

**SUMMARY**

An object of embodiments of the present application is to provide a service control method and device, communication equipment and readable storage medium, which can solve the problem of how to control the end-to-end QoS indicators of interactive services.

In order to solve the above technical problems, the present application is implemented as follows.

In a first aspect, a service control method is provided and performed by a first network node, including:

obtaining first information of a first service sent by a second network node or a user equipment (UE); wherein the first information includes: first QoS indicator information, and/or second QoS indicator information and third QoS indicator information;
sending second information of the first service to the second network node and/or the UE;
wherein the second information includes at least one of the following: fourth QoS indicator information; fifth QoS indicator information; sixth QoS indicator information; and seventh QoS indicator information;
the first QoS indicator information includes QoS indicator information from the UE to the second network node and from the second network node to the UE; the second QoS indicator information includes QoS indicator information from the UE to the second network node; the third QoS indicator information includes QoS indicator information from the second network node to the UE; the fourth QoS indicator information includes QoS indicator information from the UE to the first network node; the fifth QoS indicator information includes QoS indicator information from the first network node to the UE; the sixth QoS indicator information includes QoS indicator information from the first network node to the second network node; the seventh QoS indicator information includes QoS indicator information from the second network node to the first network node.

In a second aspect, a service control method is provided and performed by a second network node, including:

obtaining or determining first QoS indicator information of the first service;
sending, to a first network node and/or UE, at least one of the following QoS indicator information: first QoS indicator information, second QoS indicator information, third QoS indicator information, fourth QoS indicator information, fifth QoS indicator information;
wherein the first QoS indicator information includes QoS indicator information from the UE to the second network node and from the second network node to the UE; the second QoS indicator information includes QoS indicator information from the UE to the second network node; the third QoS indicator information includes QoS indicator information from the second network node to the UE; the fourth QoS indicator information includes QoS indicator information from the UE to the first network node; the fifth QoS indicator information includes QoS indicator information from the first network node to the UE.

In a third aspect, a service control method is provided and performed by a user equipment (UE), including:

receiving first configuration information from a first network node;
reporting fourth information to the first network node according to the first configuration information; wherein the fourth information is used to characterize a resource status between the UE and the first network node when performing the first service; the resource status includes at least one of the following: radio channel condition, data transmission and/or reception delay status, data transmission and/or reception success rate, data transmission and/or reception rate, jitter of data transmission, resolution of data transmission and/or reception, resolution of image transmission and/or reception, frame loss of data transmission and/or reception, frame loss of image transmission and/or reception.

In a fourth aspect, a service control device is provided and applied to a first network node, including:

a first obtaining module configured to obtain first information of a first service sent by a second network node or a user equipment (UE); wherein the first information includes: first QoS indicator information, and/or second QoS indicator information and third QoS indicator information;
a first sending module configured to send second information of the first service to the second network node and/or the UE;
wherein the second information includes at least one of the following: fourth QoS indicator information; fifth QoS indicator information; sixth QoS indicator information; and seventh QoS indicator information;
the first QoS indicator information includes QoS indicator information from the UE to the second network node and from the second network node to the UE; the second QoS indicator information includes QoS indicator information from the UE to the second network node; the third QoS indicator information includes QoS indicator information from the second network node to the UE; the fourth QoS indicator information includes QoS indicator information from the UE to the first network node; the fifth QoS indicator information includes QoS indicator information from the first network node to the UE; the sixth QoS indicator information includes QoS indicator information from the first network node to the second network node; the seventh QoS indicator information includes QoS indicator information from the second network node to the first network node.

In a fifth aspect, a service control device is provided and applied to a second network node, including:

a third obtaining module configured to obtain or determine first QoS indicator information of the first service;
a second sending module configured to send, to a first network node and/or UE, at least one of the following QoS indicator information: first QoS indicator information, second QoS indicator information, third QoS indicator information, fourth QoS indicator information, fifth QoS indicator information;
wherein the first QoS indicator information includes QoS indicator information from the UE to the second network node and from the second network node to the UE; the second QoS indicator information includes QoS indicator information from the UE to the second network node; the third QoS indicator information includes QoS indicator information from the second network node to the UE; the fourth QoS indicator information includes QoS indicator information from the UE to the first network node; the fifth QoS indicator information includes QoS indicator information from the first network node to the UE.

In a sixth aspect, a service control device is provided and applied to a user equipment (UE), including:

a third receiving module configured to receive first configuration information from a first network node;
a reporting module configured to report fourth information to the first network node according to the first configuration information; wherein the fourth information is used to characterize a resource status between the UE and the first network node when performing the first service; the resource status includes at least one of the following: radio channel condition, data transmission and/or reception delay status, data transmission and/or reception success rate, data transmission and/or reception rate, jitter of data transmission, resolution of data transmission and/or reception, resolution of image transmission and/or reception, frame loss of data transmission and/or reception, frame loss of image transmission and/or reception.

In a seventh aspect, a communication equipment includes: a processor, a memory, and a program or instruction stored in the memory and executable on the processor; wherein the program or instruction, when executed by the processor, causes the processor to perform the steps of the service control method according to the first aspect, or the steps of the service control method according to the second aspect, or the steps of the service control method according to the third aspect.

In eighth aspect, a readable storage medium, including a program or instruction stored thereon; wherein the program or instruction, when executed by a processor, performs the steps of the service control method according to the first aspect, or the steps of the service control method according to the second aspect, or the steps of the service control method according to the third aspect.

In the embodiment of the present application, the end-to-end QoS indicators of the first service (such as interactive services) can be dynamically decomposed according to the end-to-end QoS requirements of the first service, thereby controlling the end-to-end QoS indicators of the first service and ensuring the transmission requirements of the first service.

## BRIEF DESCRIPTION OF THE DRAWINGS

FIG. 1 is a flow chart of a service control method according to an embodiment of the present application;

FIG. 2 is a schematic diagram of uplink and downlink round-trip delays according to an embodiment of the present application;

FIG. 3 is a flow chart of another service control method according to an embodiment of the present application;

FIG. 4 is a flow chart of a service control process in a first embodiment of the present application;

FIG. 5 is a flow chart of a service control process in a second embodiment of the present application;

FIG. 6 is a flow chart of another service control method according to an embodiment of the present application;

FIG. 7 is a schematic diagram of a service control device according to an embodiment of the present application;

FIG. 8 is a schematic diagram of another service control device according to an embodiment of the present application;

FIG. 9 is a schematic diagram of another service control device according to an embodiment of the present application; and

FIG. 10 is a schematic diagram of a communication equipment according to an embodiment of the present application.

## DETAILED DESCRIPTION

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

Such words as "first" and "second" involved in the specification and the appended claims are merely used to differentiate different objects rather than to represent any specific order. It should be appreciated that, data used in this way may be replaced with each other, so as to implement the embodiments in an order other than that shown in the drawings or described in the specification. The objects distinguished by "first", "second", etc. are usually of the same type, and the number of objects is not limited, for example, there may be one or more first objects. In addition, the terms "and/or" in the specification and the appended claims represents at least one of associated objects, and the character "/" generally means that relationship between associated objects before and after the character "/" is "or".

The technical solutions of embodiments of the present application can be applied to various communication systems, such as, global system of mobile communication (GSM) system, long term evolution (LTE) system or fifth generation mobile communication technology (5th generation) system. Optionally, the 5G system or 5G network may also be called a new radio (NR) system or NR network.

For example, the communication system to which the embodiments of the present application are applied may include a network equipment, a network node, and a user equipment (which may also be called a terminal, a communication terminal, etc.). The network device may be a device that communicates with the user equipment. The first network node can provide communication coverage within a certain area and can communicate with UEs located in the area. Optionally, the network device may be a base station in each communication system, such as an evolutional base station (eNB) in the LTE system, or a base station in a 5G system, an NR system or a sixth generation mobile communication technology (6G) system. The first network node may be one or more base stations, transmitting points, receiving points, central units, distribution units, baseband processing units (BBUs), remote radio units (RRUs), relays, integrated access backhaul (IAB), smart meta-surface, communication balloons, flying aircraft base stations, antennas, satellite base stations, etc.

The second network node in the present disclosure may be a core network node, such as user plane function (UPF), application function (AF), mobility management entity (MME), access and mobility management function (AMF), and equipment integrated with the core network or other network elements used for connection establishment; or may be an application server, such as an XR server and/or an XR content providing node, etc.

"Service" in the present application can represent at least one of the following concepts: service, Protocol Data Unit (PDU) session, Quality of Service (QoS) flow, stream or service data flow, radio bearer, logical channel.

The "data" in the present application can be one or more of "data packets", "Physical Uplink Share Channel transmission (PUSCH)", "Physical Downlink Share Channel transmission (PDSCH)", "Data unit", "PDU set packet", "sample", "slice", "tile", "stream", "transmission" and "transport blocks" and the like.

In order to solve the problem of how to control the end-to-end QoS indicators of interactive services, the present application proposes to dynamically decompose the end-to-end QoS indicators of interactive services according to the end-to-end QoS requirements of interactive services through enhancements on the access network side and/or the core network side, thereby achieving control of the end-to-end QoS indicators of interactive services, ensuring transmission requirements of interactive services, and better completing scheduling and transmission of interactive services.

The service control method and device, communication equipment and readable storage medium provided in the embodiments of the present application will be described in detail hereinafter with reference to the accompanying drawings through specific embodiments and application scenarios.

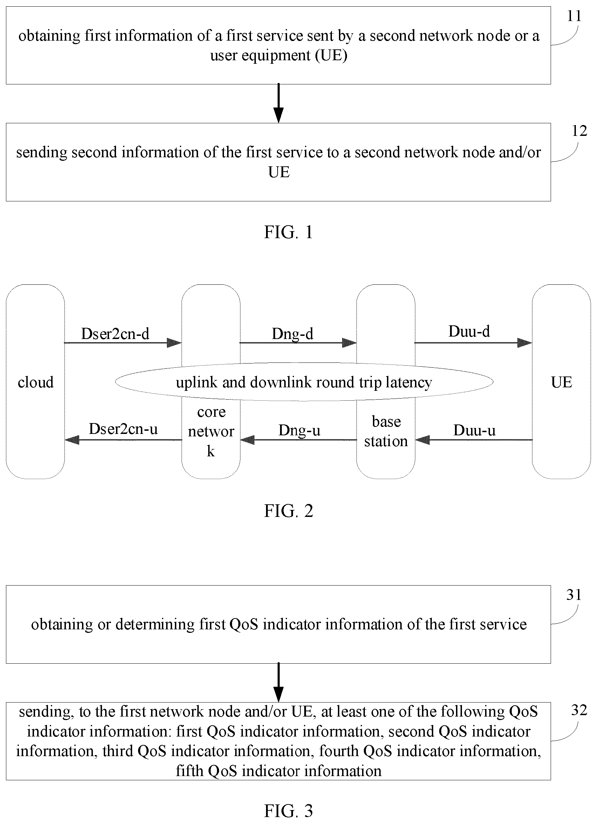

Referring to FIG. 1, FIG. 1 is a flow chart of a service control method according to an embodiment of the present application. The method is applied to a first network node. The first network node may be an access network element, such as a base station. As shown in FIG. 1, the method includes the following steps.

Step 11: obtaining first information of a first service sent by a second network node or a user equipment (UE).

In this embodiment, the first information may include: first QoS indicator information, and/or second QoS indicator information and third QoS indicator information.

Optionally, the first QoS indicator information includes QoS indicator information from the UE to the second network node and from the second network node to the UE. That is, the first QoS indicator information may indicate end-to-end QoS indicator information of a first service, such as QoS indicator information of UE-to-user plane function (UPF) or other core network elements. The second QoS indicator information includes QoS indicator information from the UE to the second network node, corresponding to an uplink service. The third QoS indicator information includes QoS indicator information from the second network node to the UE, corresponding to a downlink service.

In some embodiments, the second network node is, for example, a core network element.

In some embodiments, the first network node may obtain first QoS indicator information of the first service sent by the second network node or UE, and/or obtain the second QoS indicator information and third QoS indicator information of the first service sent by the second network node or UE.

In some embodiments, the above first service is specifically an interactive service, such as a low-latency interactive service for XR. The XR system has two outstanding features: information integration between the real world and the virtual world, and real-time interactivity. The XR system uses multi-channel communication. Persons themselves have multiple sensory perception functions, and the virtual environment can provide users with a real and highly immersive sensory experience. Gestures, body postures, voice and even eye point of view capture can be used as interaction methods in XR systems. In addition, touch, smell, hearing and/or force feedback can also be used as output to achieve combination of multi-channel augmented reality interaction and user intentions.

Step 12: sending second information of the first service to a second network node and/or UE.

In this embodiment, the second information may include at least one of the following: fourth QoS indicator information; fifth QoS indicator information; sixth QoS indicator information; and seventh QoS indicator information. The fourth QoS indicator information includes QoS indicator information from the UE to the first network node, corresponding to the uplink service. The fifth QoS indicator information includes QoS indicator information from the first network node to the UE, corresponding to downlink services. The sixth QoS indicator information includes QoS indicator information from the first network node to the second network node. The seventh QoS indicator information includes QoS indicator information from the second network node to the first network node.

In some embodiments, the first network node may decompose the second information of the first service based on the obtained first information of the first service. For example, based on the obtained first QoS indicator information of the first service, the first network node may decompose at least one of the following information: fourth QoS indicator information, fifth QoS indicator information, sixth QoS indicator information, seventh QoS indicator information; or, based on the obtained second QoS indicator information and third QoS indicator information of the first service, decompose at least one of the following: fourth QoS indicator information, fifth QoS indicator information, sixth QoS indicator information, and seventh QoS indicator information.

As a result, the end-to-end QoS indicators of the first service can be dynamically decomposed according to the end-to-end QoS requirements of the first service (such as interactive services), thereby controlling the end-to-end QoS indicators of the first service and ensuring the transmission requirements of the first service.

Optionally, the above QoS indicator information, i.e., any of the first QoS indicator information, the second QoS indicator information, the third QoS indicator information, the fourth QoS indicator information, the fifth QoS indicator information, the sixth QoS indicator information and the seventh QoS, may include but is not limited to at least one of the following: rate, packet delay, PDU set delay, packet error rate, PDU-set error Rate (PSER), priority, jitter, throughput, resolution, frame loss rate, etc.

Optionally, the above QoS indicator information, i.e., any of the first QoS indicator information, the second QoS indicator information, the third QoS indicator information, the fourth QoS indicator information, the fifth QoS indicator information, the sixth QoS indicator information and the seventh QoS indicator information, can be regarded as a rule that sets parameters for at least one of each QoS flow, Protocol Data Unit (PDU) session, packet (e.g., data packet), flow, and frame.

Optionally, the first QoS indicator information may be QoS indicator information corresponding to at least one of a QoS flow (such as a QoS flow), a PDU session, a PDU set packet, a sample, a slice, a tile, a stream, and a frame transmitted from the UE to the second network node, and QoS indicator information corresponding to at least one of a QoS flow (such as one QoS flow), a PDU session, a PDU set packet, a sample, a slice, a tile, a stream, and a frame from the second network node to the UE. For example, the first QoS indicator information may include QoS indicator information corresponding to different QoS flows or packets sent in uplink and downlink.

Optionally, the second QoS indicator information corresponds to at least one of a QoS flow (such as one QoS flow), a PDU session, a PDU set packet, a sample, a slice, a tile, a stream, and a frame. For example, the second QoS indicator information is QoS indicator information from the UE to the second network node corresponding to at least one of a QoS flow, a PDU session, a PDU set, a packet, a sample, a slice, a tile, a stream, and a frame.

Optionally, the third QoS indicator information corresponds to at least one of a QoS flow (such as one QoS flow), a PDU session, a PDU set packet, a sample, a slice, a tile, a stream, and a frame. For example, the third QoS indicator information is QoS indicator information from the second network node to the UE corresponding to at least one of a QoS flow, a PDU session, a PDU set, a packet, a sample, a slice, a tile, a stream, and a frame.

Optionally, the fourth QoS indicator information corresponds to at least one of a QoS flow (such as one QoS flow), a PDU session, a PDU set packet, a sample, a slice, a tile, a stream, and a frame. For example, the fourth QoS indicator information is QoS indicator information from the UE to the first network node corresponding to at least one of a QoS flow, a PDU session, a PDU set, a packet, a sample, a slice, a tile, a stream, and a frame.

Optionally, the fifth QoS indicator information corresponds to at least one of a QoS flow (such as one QoS flow), a PDU session, a PDU set packet, a sample, a slice, a tile, a stream, and a frame. For example, the fifth QoS indicator information is QoS indicator information from the first network node to the UE corresponding to at least one of a QoS flow, a PDU session, a PDU set, a packet, a sample, a slice, a tile, a stream, and a frame.

Optionally, the sixth QoS indicator information corresponds to at least one of a QoS flow (such as one QoS flow), a PDU session, a PDU set packet, a sample, a slice, a tile, a stream, and a frame. For example, the sixth QoS indicator information is QoS indicator information from the first network node to the second network node corresponding to at least one of a QoS flow, a PDU session, a PDU set, a packet, a sample, a slice, a tile, a stream, and a frame.

Optionally, the seventh QoS indicator information corresponds to at least one of a QoS flow (such as one QoS flow), a PDU session, a PDU set packet, a sample, a slice, a tile, a stream, and a frame. For example, the seventh QoS indicator information is QoS indicator information from the second network node to the first network node corresponding to at least one of a QoS flow, a PDU session, a PDU set, a packet, a sample, a slice, a tile, a stream, and a frame.

Traditional QoS indicators, such as delay, packet error rate, survival time, etc., are basically fixed. The core network decomposes the end-to-end QoS indicators into QoS indicators from the base station to the core network (or base station to server), and air indicators from the base station to UE, and then are sent to the base station, and the base station schedules and transmits data based on the air interface indicator. However, for ultra-low-latency interactive services, on the one hand, the uplink delay requirements and downlink delay requirements are unbalanced and variable, and the ultra-low delay requirements require a more precise decomposition of delay requirements (such as packet delay budget (PDB), and/or PDU-set delay budget (PSDB)); there are wired connections from the base station to the core network and from the core network to the server, and thus transmission channel is relatively stable, and thus the main bottleneck is the air interface. On the other hand, because the base station can determine the status of the radio channel faster and more accurately based on its own channel measurement results, channel measurement results reported by the UE, and the packet reception success, for the ultra-low latency interactive service, compared with the core network decomposing QoS indicators (such as PDB), it is more feasible and effective for the base station to decompose QoS indicators. The base station can dynamically decompose and update end-to-end QoS indicators according to dynamic uplink and downlink resource status changes on the radio side.

Optionally, in this embodiment of the present application, the first network node can obtain the resource status between the UE of the first service and the first network node, and decompose the QoS indicator of the first service according to the resource status, thereby making the decomposition of QoS indicators more feasible and effective.

Optionally, the resource status may include but is not limited to at least one of the following: radio channel condition, data transmission and/or reception delay status, data transmission and/or reception success rate, data transmission and/or reception rate, jitter of data transmission, resolution of data transmission and/or reception, resolution of image transmission and/or reception, frame loss of data transmission and/or reception, frame loss of image transmission and/or reception.

Optionally, the resource status includes uplink and/or downlink resource status.

Optionally, the above obtaining first information of the first service sent by the second network node or UE may include: obtaining the sixth QoS performance information and/or the seventh QoS performance information of the first service sent by the second network node or UE. The sixth QoS performance information is current QoS performance information from the first network node to the second network node; the seventh QoS performance information is current QoS performance information from the second network to the first network node. The QoS performance information, that is, the sixth QoS performance information and/or the seventh QoS performance information, may include but is not limited to at least one of the following: rate, packet delay, PDU set delay, packet error rate, PDU-Set Error Rate (PSER), priority, jitter, throughput, resolution, frame loss rate, etc. The QoS performance information, that is, the sixth QoS performance information and/or the seventh QoS performance information, can be regarded as actual performance parameter in the network for at least one of each QoS flow, PDU session, PDU set, packet, sample, slice, tile, stream and frame. For the QoS performance information, it can be understood as the current performance level of the network. For example, the packet delay in the QoS performance information defines an actual value of delay in transmitting a packet from one node to another node, and/or, the rate in the QoS performance information defines an actual value of a rate at which a packet is transmitted from one node to another node.

And/or, the above obtaining the first information of the first service sent by the second network node or UE may include: obtaining the sixth QoS indicator information and/or the seventh QoS indicator information of the first service sent by the second network node or UE, where the sixth QoS indicator information includes QoS indicator information from the first network node to the second network node. The seventh QoS indicator information includes QoS indicator information from the second network node to the first network node. The QoS indicator information, that is, the sixth QoS indicator information and/or the seventh QoS indicator information, may be a minimum requirement for a performance requirement. For example, the packet delay in the QoS indicator information defines a maximum value of transmission delay of a packet from one node to another node; and/or, the rate in the QoS indicator information defines a minimum value of the transmission rate of a packet from one node to another node.

In this embodiment of the present application, the above service control method may further include: decomposing, by the first network node, second information based on the obtained first information and resource status. In this way, with the help of the resource status, the decomposition of QoS indicators can be made more feasible and effective.

Optionally, the decomposing second information based on the obtained first information and resource status may include at least one of the following:

subtracting the sixth QoS indicator information and the seventh QoS indicator information obtained from the second network node from the first QoS indicator information, and decomposing fourth QoS indicator information and/or fifth QoS indicator information according to the resource status; that is to say, first using the first QoS indicator information to subtract the sixth QoS indicator information and the seventh QoS indicator information obtained from the second network node, and then using the subtraction result to decompose the fourth QoS indicator information and/or fifth QoS indicator information according to the resource status;

subtracting the sixth QoS performance information and the seventh QoS performance information obtained from the second network node from the first QoS indicator information, and decomposing the fourth QoS indicator information and/or the fifth QoS indicator information according to resource status; that is to say, first using the first QoS indicator information to subtract the sixth QoS performance information and the seventh QoS performance information obtained from the second network node, and then using the subtraction result to decompose the fourth QoS indicator information and/or the fifht QoS performance information according to the resource status.

Optionally, the decomposing second information based on the obtained first information and resource status may include at least one of the following:

subtracting the sixth QoS indicator information and the seventh QoS indicator information obtained from the second network node from the first QoS indicator information, and updating and decomposing the fourth QoS indicator information and/or the fifth QoS indicator information according to the resource status; that is to say, first using the first QoS indicator information to subtract the sixth QoS indicator information and the seventh QoS indicator information obtained from the second network node, and then using the subtraction result to update and decompose the fourth QoS indicator information and/or fifth QoS indicator information based on the resource status;

subtracting the sixth QoS performance information and the seventh QoS performance information obtained from the second network node from the first QoS indicator information, and updating and decomposing the fourth QoS indicator information and/or the fifth QoS indicator information according to resource status; that is to say, first using the first QoS indicator information to subtract the sixth QoS performance information and the seventh QoS performance information obtained from the second network node, and then using the subtraction result to update and decompose the fourth QoS indicator information and/or fifth QoS indicator information based on the resource status.

Optionally, the above obtaining the first information of the first service sent by the second network node or the UE may include: obtaining the second QoS indicator information and third QoS indicator information decomposed from the first service and sent by the second network node or the UE; where the second QoS indicator information corresponds to at least one of uplink QoS flow, PDU session, PDU set, packet, sample, slice, tile, stream and frame, and corresponds to the uplink service. The third QoS indicator information corresponds to at least one of a downlink QoS flow, a PDU session, a PDU set, a packet, a sample, a slice, a tile, a stream and a frame, and corresponds to the downstream service.

Optionally, after obtaining the resource status between the UE of the first service and the first network node, the first network node may evaluate and obtain the fourth QoS indicator information and/or the fifth QoS indicator information of the first service based on the obtained uplink and/or downlink resource status; determining the sixth QoS indicator information and/or the seventh QoS indicator information of the first service according to the fourth QoS indicator information and/or the fifth QoS indicator information. In this way, end-to-end decomposition of QoS indicators can be achieved.

Optionally, after obtaining the resource status between the UE of the first service and the first network node, the first network node may evaluate and obtain the fourth QoS indicator information and/or fifth QoS indicator information of the first service based on the obtained uplink and/or downlink resource status; update the sixth QoS indicator information and/or the seventh QoS indicator information of the first service according to the fourth QoS indicator information and/or the fifth QoS indicator information. In this way, end-to-end updating of QoS indicators can be achieved.

In the embodiment of the present application, the above service control method may further include: adjusting, by the first network node, media encoding and/or decoding of the first service according to the obtained first information and resource status, and/or adjusting the rate of the first service. That is, the rate of media encoding and/or service is matched to the resource status of the network. For example, if the resource status meets a certain condition, for example, if the delay is less than a threshold A and a measurement result is higher than a threshold B, the rate of media encoding and/or services will be increased; otherwise, the rate of media coding and/or services will be reduced.

In the embodiment of the present application, the above service control method may further include: adjusting, by the first network node, selection between 'GBR' and 'Non-GBR' of the first service according to the obtained first information and resource status. In this way, with the help of resource status, the setting of QoS indicators can be made more feasible and effective. GBR refers to Guaranteed Bit Rate. Non-GBR refers to non-guaranteed Bit Rate.

In this embodiment of the present application, the first network node may dynamically send updated second information of the first service. The above service control methods may further include:

obtaining updated first information sent by the second network node or UE;
sending updated second information to the second network node and/or the UE in a way including at least one of the following methods:

sending the second information by including it in a GPRS Tunnelling Protocol for the user plane (GTP-U) header for the user plane;
sending second information by including it in a Real-time Transport Protocol (RTP) header;
sending second information through signaling between network nodes.

It can be understood that the above updated second information is decomposed according to the updated first information, thereby achieving real-time updating of the end-to-end QoS indicator.

In this embodiment of the present application, the first network node can update the second information of the first service in real time. The above service control methods may further include:

obtaining the updated first information sent by the second network node or UE;
sending the updated second information to the second network node and/or the UE.

It can be understood that the above updated second information is decomposed according to the updated first information, thereby achieving real-time updating of the end-to-end QoS indicator.

Optionally, the above service control method may further include: calculating, by the first network node, a change value of the fourth QoS indicator information and/or a change value of the fifth QoS indicator information at a first moment according to the channel measurement result of the first network node, the channel measurement result reported by the UE and the success reception of packet; then, according to the change value of the fourth QoS indicator information, updating the change value of the fifth QoS indicator information, or, according to the change value of the fifth QoS indicator information, updating the change value of the fourth QoS indicator information, thereby realize dynamic updating of uplink and/or downlink QoS indicators.

Optionally, after obtaining the resource status between the UE of the first service and the first network node, the first network node can use the following formula 1 and formula 2 to obtain Duu-d and Duu-u:

$$\text{Formula 1: } Duu\text{-}d = (a*ULDL\text{-}RTT\text{-}Delay - Dser2cn\text{-}d - Dng\text{-}d*hop) - delta$$

$$\text{Formula 2: } Duu\text{-}u = ((1\text{-}a)*ULDL\text{-}RTT\text{-}Delay - Dser2cn\text{-}u - Dng\text{-}u*hop) + delta$$

Where the Duu-d is the downlink delay of the first service from the first network node to the UE; the Duu-u is the uplink delay of the first service from the UE to the first network node; the delta is a delay correction value obtained by evaluating the uplink and/or downlink resource status; the ULDL-RTT-Delay is the end-to-end round-trip transmission delay of the first service; the a is determined based on the first QoS indicator information; the Dser2cn-d is the downlink delay of the first service from the cloud to the second network node, the Dser2cn-u is the uplink delay of the first service from the second network node to the cloud; the Dng-d is the downlink delay of the first service from the second network node to the first network node; and the hop is the number of frequency hopping.

For example, referring to FIG. 2, the decomposition of Duu-d and Duu-u can include the following steps.

S1: a base station performs preliminary decomposition based on notified uplink/downlink delay requirement range of the interactive service (that is, the maximum tolerable delay requirement):

$$DL\text{-}RTT\text{-}Delay0 = a*ULDL\text{-}RTT\text{-}Delay \qquad (1)$$

$$UL\text{-}RTT\text{-}Delay0 = (1\text{-}a)*ULDL\text{-}RTT\text{-}Delay \qquad (2)$$

where a is related to the maximum tolerable delay requirement and can be determined based on the maximum tolerable delay requirement.

S2: the base station performs preliminary decomposition based on obtained end-to-end round-trip transmission delay requirement, the delay from the cloud to the core network, the delay from the core network to the base station, and uplink/downlink delay requirement range (i.e., the maximum tolerable delay requirement):

$$Duu\text{-}d0(DL\ Uu\ budget) = a*ULDL\text{-}RTT\text{-}Delay - Dser2cn\text{-}d - Dng\text{-}d*hop \quad (3)$$

$$Duu\text{-}u0(UL\ Uu\ budget) = (1\text{-}a)*ULDL\text{-}RTT\text{-}Delay - Dser2cn\text{-}u - Dng\text{-}u*hop \quad (4)$$

S3a: (Dynamic update mode 1): at a moment t1, the base station determines state of radio channel or directly performs air interface delay evaluation for interactive services in the uplink/downlink based on its own channel measurement results, a channel measurement result reported by the UE, and the success reception of packet. If a current downlink air interface delay is Duu-d0-delta1, the base station performs demand decomposition update:

$$Duu\text{-}d1 = (a*ULDL\text{-}RTT\text{-}Delay - Dser2cn\text{-}d - Dng\text{-}d*hop) - delta1 \quad (5)$$

$$Duu\text{-}u1 = ((1\text{-}a)*ULDL\text{-}RTT\text{-}Delay - Dser2cn\text{-}u - Dng\text{-}u*hop) + delta1 \quad (6)$$

S3b: (Dynamic update mode 2): the base station obtains a change in the uplink/downlink delay requirement range (that is, the maximum tolerable delay requirement) of the interactive service notified by the server or the core network at a moment t2, for example, the current downlink delay budget DL-RTT-Delay2 is DL-RTT-Delay0-delta2, then the base station performs demand decomposition update and changes a to b, where b=(DL-RTT-Delay0-delta2)/ULDL-RTT-Delay:

$$Duu\text{-}d2 = b*ULDL\text{-}RTT\text{-}Delay - Dser2cn\text{-}d - Dng\text{-}d*hop \quad (7)$$

$$Duu\text{-}u2 = (1\text{-}b)*ULDL\text{-}RTT\text{-}Delay - Dser2cn\text{-}u - Dng\text{-}u*hop \quad (8)$$

Optionally, the above obtaining the resource status between the UE of the first service and the first network node may include: obtaining, by the first network node, its own first channel measurement result, and/or receiving a second channel measurement result reported by the UE; then, determining the resource status according to at least one of the following: the first channel measurement result, the second channel measurement result, and the data reception success of the first network node.

Since the dynamic uplink and downlink resource status on the radio side changes dynamically, especially XR services have a relatively large demand for large bandwidth, high-frequency band FR2 will be a common scenario. The channel in this frequency band fades faster. Compared with the traditional low-frequency band FR1, the channel quality is more unstable. If the base station finds that the transmission delay of the uplink (downlink) service exceeds the previously set delay budget, in order to ensure successful transmission and ensure that the delay of the entire service does not exceed the demand, the base station can quickly start the downlink (uplink) transmission acceleration process and save transmission of the entire interaction service. The following measures can be taken:

1) Pre-configuring at least two sets of resources for the UE in advance. When the base station finds that the downlink (DL) service has timed out, the base station triggers the UE to use resources corresponding to low latency, for example, this set of resources has a larger bandwidth (large number of PRBs), high-order modulation mode, large transmission power, or more beams, etc.;
2) When the downlink data received by the UE is delayed than the predetermined time, it autonomously triggers the start of a short-period configured grant (CG) transmission, or starts a high-order modulation mode, starts multi-carrier transmission, multi-beam, multi-path, multi-network node or other UE-assisted transmission methods to shorten the uplink (UL) transmission delay.

Optionally, the above service control method further includes: sending second configuration information to the UE, where the second configuration information is used to configure at least two sets of resources for the UE; when the downlink service of the first service times out, sending trigger information to the UE, where the trigger information is used to trigger the UE to use the first resource to perform the first service, and the first resource is the resource corresponding to the low-latency service in the at least two sets of resources. This can ensure that the delay of the entire service does not exceed the demand, and can quickly start the uplink transmission acceleration process and save the transmission of the entire interactive service.

Optionally, generally speaking, multimedia services such as XR and cloud games are interactive services. Therefore, the downstream DL stream in the service mostly includes synchronization, video frame re-matching feedback video tile and video slice package. It is not difficult to infer that most packets in the DL stream are video slice packets. Feedback and synchronization packets are smaller in size and less in number, but they are more important for DL streaming as well as UL streaming. Because the loss of synchronization and feedback results in transmission failure or the inability to send new packets, and the loss of video segment packets usually affects a single frame. The traditional UL stream in VR/XR is composed of video frame reception, user input, synchronization and feedback of head-tracking information packets. In panoramic VR/XR applications, the user's field of view (FOV) also needs to be sent in UL format. Similarly, feedback and synchronization in UL are small but crucial. The head-tracking information packet is generated by the Head Mounted Display (HMD). Its generation period is related to the frame rate and/or sampling rate of the sensor in the HMD. Similarly, UL's user input, synchronization and head-tracking information packet feedback and other information will also directly affect transmission of video frames/video slices/video tiles and other information in the DL stream at the next point in time. Optionally, the network can inform the UE of association between uplink and downlink services to ensure effective transmission of services. The above service control method further includes: sending third configuration information to the UE, where the third configuration information is used to configure association between the uplink service and the downlink service of the first service.

Optionally, the association between the uplink service and the downlink service may include an association at a service level and/or a resource, and may include at least one of the following:

1) an association between logical information of the uplink service and logical information of the downlink service;
2) an association between uplink service session (such as PDU session) and downlink service session (such as PDU session);
3) an association between the Data Radio Bearer (DRB) of the uplink service and the DRB of the downlink service;
4) an association between Radio Link Control (RLC) entity of the uplink service and the RLC entity of the downlink service;
5) host and slave relationship between the uplink service and the downlink service; for example, if the host service fails to be sent, the slave service will not be initiated; for example, the uplink command key service is the master, and the downlink video streaming service depends on the command key service; or the downlink video streaming service is the master, and the user's action feedback is an auxiliary service;
6) an association between uplink service resource and downlink service resource; for example, the association between the two can be indicated in the configuration signaling of Semi-Persistent Scheduling (SPS) and CG, as well as the host and slave relationship, the associated uplink grant signaling and downlink scheduling signaling can be placed in one downlink control information (DCI) signaling and sent at once.

Optionally, the above service control method further includes at least one of the following:

when the downlink service transmission of the first service fails, the transmission resources and/or timer settings of the uplink service corresponding to the downlink service are given up, and/or monitoring of transmission of the uplink service corresponding to the downlink service is given up; for example, if the base station fails to transmit downlink services (such as video streams), the transmission resources and timer settings of the corresponding uplink services are recovered, and monitoring of Scheduling Request (SR)/Buffer Status Report (BSR) and/or monitoring of the Physical Uplink Shared Channel (PUSCH) for the transmission of the corresponding uplink service are given up; when the reception of the uplink service of the first service fails, the transmission resources and/or timer settings of the downlink service corresponding to the uplink service are given up; for example, if the base station fails to receive the uplink service (such as action flow), the base station gives up the transmission resources and timer settings of the corresponding downlink services; for example, the UE can be notified of the association relationship configuration between logical information, between PDU sessions, between DRBs, and/or between RLC entities.

Referring to FIG. 3, FIG. 3 is a flow chart of a service control method according to an embodiment of the present application, and the method is applied to a second network node, such as a core network element. As shown in FIG. 3, the method includes the following steps.

Step 31: obtaining or determining first QoS indicator information of the first service.

Step 32: sending, to the first network node and/or UE, at least one of the following QoS indicator information: first QoS indicator information, second QoS indicator information, third QoS indicator information, fourth QoS indicator information, fifth QoS indicator information.

In this embodiment, the first QoS indicator information includes QoS indicator information from the UE to the second network node and from the second network node to the UE. That is, the first QoS indicator information may indicate end-to-end QoS indicator information of a first service, such as QoS indicator information of UE-to-user plane function (UPF) or other core network elements. The second QoS indicator information includes QoS indicator information from the UE to the second network node, corresponding to an uplink service. The third QoS indicator information includes QoS indicator information from the second network node to the UE, corresponding to a downlink service. The fourth QoS indicator information includes QoS indicator information from the UE to the first network node, corresponding to the uplink service. The fifth QoS indicator information includes QoS indicator information from the first network node to the UE, corresponding to downlink services.

In some embodiments, the first network node is, for example, an access network element, such as a base station.

In some embodiments, the above first service is specifically an interactive service, such as a low-latency interactive service for XR.

As a result, the end-to-end QoS indicators of the first service can be dynamically decomposed according to the end-to-end QoS requirements of the first service (such as interactive services), thereby controlling the end-to-end QoS indicators of the first service and ensuring the transmission requirements of the first service.

Optionally, the above service control method may further include:

receiving from the first network node, a resource status of the first service between the UE and the first network node; where the resource status may include at least one of the following: radio channel condition, data transmission and/or reception delay status, data transmission and/or reception success rate, data transmission and/or reception rate, jitter of data transmission, resolution of data transmission and/or reception, resolution of image transmission and/or reception, frame loss of data transmission and/or reception, frame loss of image transmission and/or reception.

Optionally, the resource status includes uplink and/or downlink resource status.

Optionally, the above service control method may further include:

evaluating and obtaining fourth QoS indicator information and/or fifth QoS indicator information of the first service according to the uplink and/or downlink resource status;
determining the sixth QoS indicator information and/or the seventh QoS indicator information of the first service according to the fourth QoS indicator information and/or the fifth QoS indicator information, or updating the sixth QoS indicator information and/or the seventh QoS indicator information of the first service;
where the sixth QoS indicator information includes QoS indicator information from the first network node to the second network node; the seventh QoS indicator information includes QoS indicator information from the second network node to the first network node.

Optionally, the above service control method may further include:
receiving from the first network node, third information of the first service between the UE and the first network node, where the third information includes at least one of the following: fourth QoS performance information and/or fifth QoS performance information of the first service; where the fourth QoS performance information is current QoS performance information from the UE to the first network node; the fifth QoS performance information is current QoS performance information from the first network to the UE. The QoS performance information, that is, the fourth QoS performance information and/or the fifth QoS performance information, may include at least one of the following: rate, packet delay, PDU set delay, packet error rate, PDU-Set Error Rate (PSER), priority, jitter, throughput, resolution, frame loss rate, etc. The QoS performance information, that is, the fourth QoS performance information and/or the fifth QoS performance information, can be regarded as actual performance parameter in the network for at least one of each QoS flow, PDU session, PDU set, packet, sample, slice, tile, stream and frame. For the QoS performance information, it can be understood as the current performance level of the network. For example, the packet delay in the QoS performance information defines an actual value of delay in transmitting a packet from one node to another node, and/or, the rate in the QoS performance information defines an actual value of a rate at which a packet is transmitted from one node to another node.

Optionally, the above service control method may further include at least one of the following:

subtracting the fourth QoS performance information and the fifth QoS performance information obtained from the first network node from the first QoS indicator information, and decomposing the sixth QoS indicator information and/or the seventh QoS indicator information according to the resource status; that is to say, first using the first QoS indicator information to subtract the fourth QoS performance information and the fifth QoS performance information obtained from the first network node, and then using the subtraction result to decompose the sixth QoS indicator information and/or seventh QoS indicator information according to the resource status;

subtracting the fourth QoS performance information and the fifth QoS performance information obtained from the first network node from the first QoS indicator information, and updating the decomposed sixth QoS indicator information and/or seventh QoS performance information according to the resource status; that is to say, first using the first QoS indicator information to subtract the fourth QoS performance information and the fifth QoS performance information obtained from the first network node, and then using the subtraction result to update the decomposed sixth QoS indicator information and/or the seventh QoS indicator information according to the resource state;

where the sixth QoS indicator information includes QoS indicator information from the first network node to the second network node; the seventh QoS indicator information includes QoS indicator information from the second network node to the first network node.

The present application will be described in detail hereinafter with reference to specific embodiments.

First embodiment

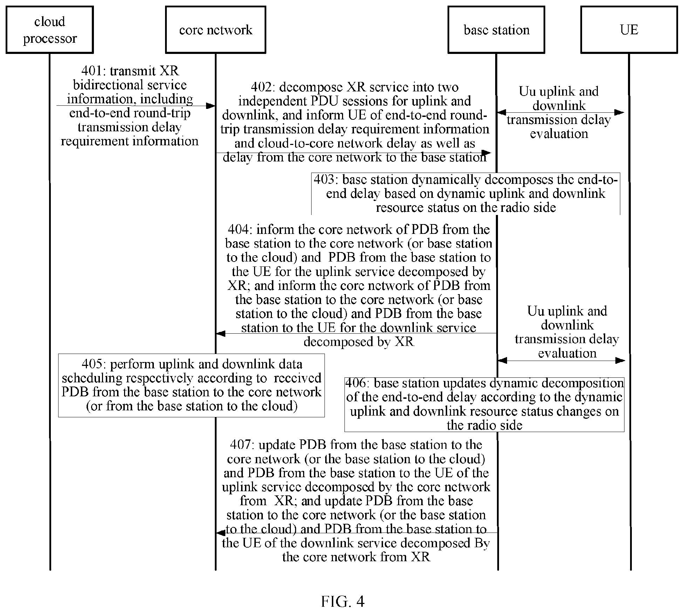

In the first embodiment, the base station serves as an RTT delay dynamic decomposition node. As shown in FIG. 4, the corresponding service control process includes the following steps.

Step 401: a cloud processor transmits XR bidirectional service information to a core network element, including at least end-to-end round-trip transmission delay requirement information.

Step 402: the core network element decomposes the XR service received from an application layer, establishes two independent PDU sessions for uplink and downlink, and sends to the base station, end-to-end round-trip transmission delay requirement information and cloud-to-core network delay information as well as delay information from the core network to the base station, so that the base station can obtain required information as the RTT delay dynamic decomposition node.

Step 403: the base station obtains uplink and downlink resource status based on uplink and downlink transmission delay evaluation between the base station and the UE (Uu interface), and dynamically decomposes the end-to-end delay of the XR service based on the dynamic uplink and downlink resource status on the radio side as well as information obtained from the core network elements, thereby obtaining a decomposition result. For example, the decomposition result may at least include: PDB from the base station to the core network (or from the base station to the cloud) for the uplink service and PDB from the UE to the base station, and PDB from the core network to the base station (or from the cloud to the base station) for the downlink service and PDB from the base station to the UE.

Step 404: the base station notifies the core network element of the obtained decomposition result, for example, notifying: the PDB from the base station to the core network (or from the base station to the cloud) for the uplink service and PDB from the UE to the base station, and/or, PDB from the core network to the base station (or from the cloud to the base station) for the downlink service and PDB from the base station to the UE.

Step 405: the core network element performs uplink and downlink data scheduling respectively according to the received PDB from the base station to the core network (or from the base station to the cloud) and the PDB from the core network to the base station (or from the cloud to the base station).

Step 406: the base station obtains the uplink and downlink resource status based on the uplink and downlink transmission delay evaluation between the base station and the UE (Uu interface), and updates end-to-end delay of the XR service based on the dynamic uplink and downlink resource status on the radio side and the information obtained from the core network elements, thereby obtaining an updated result. For example, the updated result may at least include: the PDB from the base station to the core network (or from the base station to the cloud) for the uplink service and PDB from the UE to the base station, and, PDB from the core network to the base station (or from the cloud to the base station) for the downlink service and PDB from the base station to the UE.

Step 407: the base station notifies the core network element of the obtained updated result, for example, informing: the updated PDB from the base station to the core network (or from the base station to the cloud) and PDB from the UE to the base station for the uplink service, and/or the updated PDB from the core network to the base station (or from the cloud to the base station) and PDB from the base station to the UE. Afterwards, the core network element can perform uplink and downlink data scheduling respectively based on the updated PDB from the base station to the core network (or from the base station to the cloud) and the PDB from the core network to the base station (or from the cloud to the base station).

Second embodiment

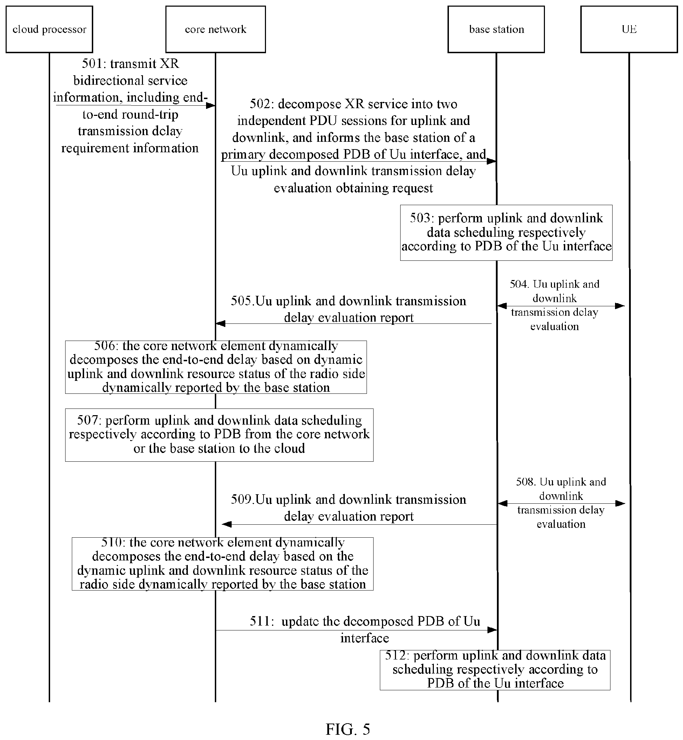

In the second embodiment, the core network element serves as an RTT delay dynamic decomposition node. As shown in FIG. 5, the corresponding service control process includes the following steps.

Step 501: a cloud processor transmits XR bidirectional service information to the core network element, including at least end-to-end round-trip transmission delay requirement information.

Step 502: the core network element decomposes the XR service received from an application layer, establishes two independent PDU sessions for the uplink and downlink, and informs the base station of a primary decomposed PDB between the base station and the UE (Uu interface), and sends to the base station, a Uu uplink and downlink transmission delay evaluation obtaining request.

Step 503: the base station performs uplink and downlink data scheduling respectively according to the obtained PDB of the Uu interface.

Step 504: the base station performs Uu uplink and downlink transmission delay evaluation with the UE.

Step 505: the base station sends a Uu uplink and downlink transmission delay evaluation report to the core network element.

Step 506: the core network element dynamically decomposes the end-to-end delay of the XR service based on the dynamic uplink and downlink resource status of the radio side dynamically reported by the base station, thereby obtaining a decomposition result. For example, the decomposition result may at least include: PDB from the base station to the core network (or from the base station to the cloud) for the uplink service and PDB from the UE to the base station, and PDB from the core network to the base station (or 3from the cloud to the base station) for the downlink service and PDB from the base station to the UE.

Step 507: the core network element performs uplink and downlink data scheduling respectively according to the PDB from the core network or the base station to the cloud.

Step 508: the base station performs Uu uplink and downlink transmission delay evaluation with the UE.

Step 509: the base station re-sends the Uu uplink and downlink transmission delay evaluation report to the core network element.

Step 510: the core network element dynamically decomposes the end-to-end delay of the XR service based on the dynamic uplink and downlink resource status of the radio side dynamically reported by the base station, thereby obtaining the decomposition result. For example, the decomposition result may at least include: the PDB from the base station to the core network (or from the base station to the cloud) for the uplink service and the PDB from the UE to the base station, and the PDB from the core network to the base station (or from the cloud to the base station) for the downlink service and PDB from the base station to the UE.

Step 511: the core network element updates the decomposed PDB of Uu interface to the base station.

Step 512: the base station performs uplink and downlink data scheduling respectively according to the obtained PDB of the Uu interface.

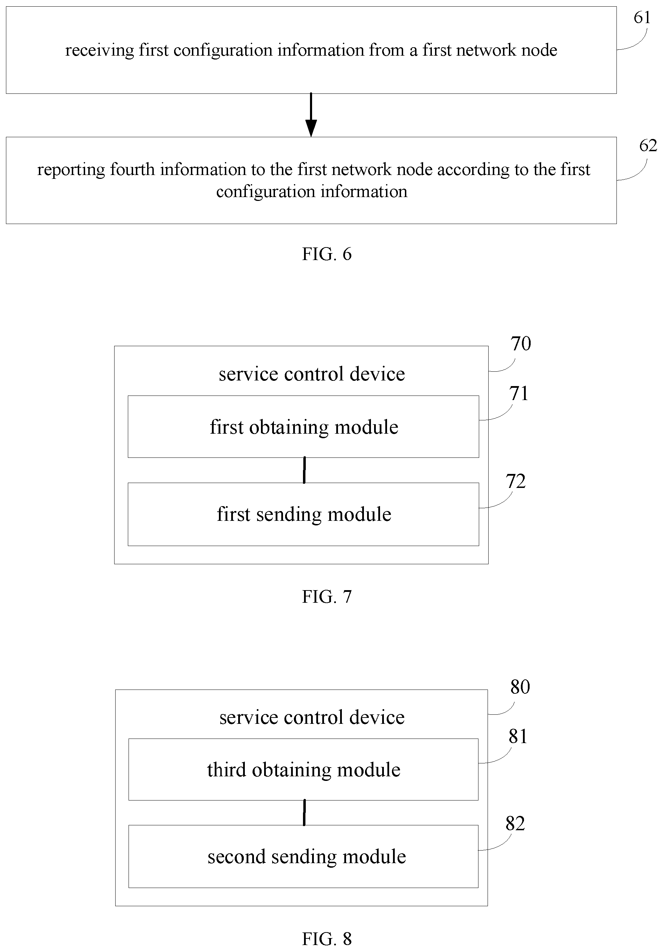

Referring to FIG. 6, FIG. 6 is a flow chart of a service control method according to an embodiment of the present application, and the method is applied to a UE. As shown in FIG. 6, the method includes the following steps.

Step 61: receiving first configuration information from a first network node;

Step 62: reporting fourth information to the first network node according to the first configuration information.

In this embodiment, the fourth information is used to characterize the resource status between the UE and the first network node when performing the first service. The resource status may include but is not limited to at least one of the following: radio channel condition, data transmission and/or reception delay status, data transmission and/or reception success rate, data transmission and/or reception rate, jitter of data transmission, resolution of data transmission and/or reception, resolution of image transmission and/or reception, frame loss of data transmission and/or reception, frame loss of image transmission and/or reception.

In some embodiments, the first network node is, for example, an access network element, such as a base station.

In some embodiments, the above first service is specifically an interactive service, such as a low-latency interactive service for XR.

In this way, by reporting the fourth information, the first network node can learn the resource status before the base station and the UE when performing the first service, thereby assisting the first network node to dynamically decompose the end-to-end QoS indicators of the first service, and achieving control of the end-to-end QoS indicators of the first service to ensure transmission requirements of the first service.

Optionally, the above service control method may further include:

when the time for the UE to receive and/or send a packet of the first service is greater than a first threshold value and/or less than a second threshold value compared to a pre-configured packet delay, starting to report the fourth information to the first network node according to the first configuration information, so that the first network node can know the resource status between the base station and the UE.

Since the dynamic uplink and downlink resource status on the radio side changes dynamically, especially XR services have a relatively large demand for large bandwidth, high-frequency band FR2 will be a common scenario. The channel in this frequency band fades faster. Compared with the traditional low-frequency band FR1, the channel quality is more unstable. If the base station finds that the transmission delay of the uplink (downlink) service exceeds the previously set delay budget, in order to ensure successful transmission and ensure that the delay of the entire service does not exceed the demand, the base station can quickly start the downlink (uplink) transmission acceleration process and save transmission of the entire interaction service. The following measures can be taken:

1) Pre-configuring at least two sets of resources for the UE in advance. When the base station finds that the downlink (DL) service has timed out, the base station triggers the UE to use resources corresponding to low latency, for example, this set of resources has a larger bandwidth (large number of PRBs), high-order modulation mode, large transmission power, or more beams, etc.;

2) When the downlink data received by the UE is delayed than the predetermined time, it autonomously triggers the start of a short-period configured grant (CG) transmission, or starts a high-order modulation mode, starts multi-carrier transmission, multi-beam, multi-path, multi-network node or other UE-assisted transmission methods to shorten the uplink (UL) transmission delay.

Optionally, the above service control method further includes: receiving second configuration information from the first network node, where the second configuration information is used to configure at least two sets of resources for the UE; when the downlink service of the first service times out, receiving trigger information from the first network node, where the trigger information is used to trigger the UE to use the first resource to perform the first service, and the first resource is the resource corresponding to the low-latency service in the at least two sets of resources. This can ensure that the delay of the entire service does not exceed the demand, and can quickly start the uplink transmission acceleration process and save the transmission of the entire interactive service.

Optionally, the above service control method may further include: if the time when the UE receives the downlink data of the first service is delayed beyond a predetermined time, initiating a low-latency configuration grant to send the uplink service of the first service.

Optionally, the network can inform the UE of an association between uplink and downlink services to ensure effective transmission of services. The above service control method further includes: receiving third configuration information from the first network node, where the third configuration information is used to configure the association between the uplink service and the downlink service of the first service.

Optionally, the association between the uplink service and the downlink service may include an association at a service level and/or a resource, and may include at least one of the following:

1) an association between logical information of the uplink service and logical information of the downlink service;
2) an association between uplink service session (such as PDU session) and downlink service session (such as PDU session);
3) an association between the Data Radio Bearer (DRB) of the uplink service and the DRB of the downlink service;
4) an association between Radio Link Control (RLC) entity of the uplink service and the RLC entity of the downlink service;
5) host and slave relationship between the uplink service and the downlink service; for example, if the host service fails to be sent, the slave service will not be initiated; for example, the uplink command key service is the master, and the downlink video streaming service depends on the command key service; or the downlink video streaming service is the master, and the user's action feedback is an auxiliary service;

6) an association between uplink service resource and downlink service resource; for example, the association between the two can be indicated in the configuration signaling of Semi-Persistent Scheduling (SPS) and CG, as well as the host and slave relationship, the associated uplink grant signaling and downlink scheduling signaling can be placed in one downlink control information (DCI) signaling and sent at once.

Optionally, the above service control method further includes at least one of the following:

when the downlink service transmission of the first service fails, ignoring transmission resources and/or timer settings of the uplink service corresponding to the downlink service, for example, if the UE fails to receive downlink services (such as video streams), the UE ignores the transmission resources and timer settings of the corresponding uplink services, and reports abnormality to the network; for example, an association relationship configuration between logical information, between PDU sessions, between DRBs and/or between RLC entities can be notified to the UE;

when transmission of the uplink service of the first service fails, the transmission resources and/or timer settings of the downlink service corresponding to the uplink service are ignored. For example, if transmission of the UE's uplink service (such as action information) fails, ignoring monitoring, decoding and reporting of corresponding channel state information (CSI) reference signal (CSI-RS) measurement result of physical downlink control channel (PDCCH) and/or physical downlink shared channel (PDSCH) of the corresponding downlink service; for example, the association relationship configuration between logical information, between PDU sessions, between DRBs and/or between RLC entities can be informed to the UE.

It is to be noted that, for the service control method provided in the embodiment of the present application, the execution entity may be a service control device, or a control module in the service control device for executing the service control method. In the embodiment of the present application, the service control device executing the service control method is taken as an example to describe the service control device provided in the embodiment of the present application.

Referring to FIG. 7, FIG. 7 is a schematic diagram of a service control device according to an embodiment of the present application. The device is applied to the first network node. As shown in FIG. 7, the service control device 70 includes:

a first obtaining module 71 used to obtain first information of a first service sent by a second network node or a user equipment (UE); wherein the first information includes: first QoS indicator information, and/or second QoS indicator information and third QoS indicator information;

a first sending module 72 used to send second information of the first service to the second network node and/or the UE;

where the second information includes at least one of the following: fourth QoS indicator information; fifth QoS indicator information; sixth QoS indicator information; and seventh QoS indicator information;

the first QoS indicator information includes QoS indicator information from the UE to the second network node and from the second network node to the UE; the second QoS indicator information includes QoS indicator information from the UE to the second network node; the third QoS indicator information includes QoS indicator information from the second network node to the UE; the fourth QoS indicator information includes QoS indicator information from the UE to the first network node; the fifth QoS indicator information includes QoS indicator information from the first network node to the UE; the sixth QoS indicator information includes QoS indicator information from the first network node to the second network node; the seventh QoS indicator information includes QoS indicator information from the second network node to the first network node.

Optionally, the QoS indicator information includes at least one of the following: rate, packet delay, PDU set delay, packet error rate, PDU-Set Error Rate (PSER), priority, jitter, throughput, resolution, frame loss rate. The QoS indicator information is regarded as a criterion for setting parameters for at least one of each QoS flow, protocol data unit PDU session, packet, flow and frame.

Optionally, the first QoS indicator information is QoS indicator information corresponding to at least one of a QoS flow, a PDU session, a PDU set, a packet, a sample, a slice, a tile, a stream, and a frame transmitted from the UE to the second network node, and at least one of a QoS flow, a PDU session, a PDU set, a packet, a sample, a slice, a tile, a stream, and a frame from the second network node to the UE; the second QoS indicator information corresponds to at least one of a QoS flow, a PDU session, a PDU set, a packet, a sample, a slice, a tile, a stream, and a frame; the third QoS indicator information corresponds to at least one of a QoS flow, a PDU session, a PDU set, a packet, a sample, a slice, a tile, a stream, and a frame; the fourth QoS indicator information corresponds to at least one of a QoS flow, a PDU session, a PDU set, a packet, a sample, a slice, a tile, a stream, and a frame; the fifth QoS indicator information corresponds to at least one of a QoS flow, a PDU session, a PDU set, a packet, a sample, a slice, a tile, a stream, and a frame; the sixth QoS indicator information corresponds to at least one of a QoS flow, a PDU session, a PDU set, a packet, a sample, a slice, a tile, a stream, and a frame; the seventh QoS indicator information corresponds to at least one of a QoS flow, a PDU session, a PDU set, a packet, a sample, a slice, a tile, a stream, and a frame.

Optionally, the first obtaining module 71 is further used to obtain resource status of the first service between the UE and the first network node.

The resource status includes at least one of the following: radio channel condition, data transmission and/or reception delay status, data transmission and/or reception success rate, data transmission and/or reception rate, jitter of data transmission, resolution of data transmission and/or reception, resolution of image transmission and/or reception, frame loss of data transmission and/or reception, frame loss of image transmission and/or reception.

Optionally, the first obtaining module 71 is further used to: obtain the sixth QoS performance information and/or the seventh QoS performance information of the first service sent by the second network node or the UE; and/or, obtain the sixth QoS indicator information and/or seventh QoS indicator information of the first service sent by the second network node or the UE.

The sixth QoS performance information is current QoS performance information from the first network node to the second network node; the seventh QoS performance information is current QoS performance information from the second network to the first network node. performance information.

The QoS performance information includes at least one of the following: rate, packet delay, PDU set delay, packet error rate, PDU-Set Error Rate (PSER), priority, jitter, throughput, resolution, frame loss rate; the QoS performance information is regarded as actual performance parameter in the network for at least one of each QoS flow, PDU session, PDU set, packet, sample, slice, tile, stream and frame.

Optionally, the service control device 70 further includes:
a first decomposition module used to decompose second information according to the first information and the resource status; and/or adjust media encoding and/or decoding of the first service according to the first information and resource status, and/or adjusting the rate of the first service.

Optionally, the decomposition module is used for at least one of the following:

subtracting the sixth QoS indicator information and the seventh QoS indicator information obtained from the second network node from the first QoS indicator information, and decomposing fourth QoS indicator information and/or fifth QoS indicator information according to the resource status;
subtracting the sixth QoS performance information and the seventh QoS performance information obtained from the second network node from the first QoS indicator information, and decomposing the fourth QoS indicator information and/or the fifth QoS indicator information according to resource status.

Optionally, the decomposition module is used for at least one of the following:

subtracting the sixth QoS indicator information and the seventh QoS indicator information obtained from the second network node from the first QoS indicator information, and updating decomposed the fourth QoS indicator information and/or the fifth QoS indicator information according to the resource status;
subtracting the first QoS performance information and the second QoS performance information obtained from the second network node from the first QoS indicator information, and updating decomposed the fourth QoS indicator information and/or the fifth QoS indicator information according to resource status.

Optionally, the first obtaining module 71 is further used to:
obtain the second QoS indicator information and third QoS indicator information decomposed from the first service and sent by the second network node or the UE; where the second QoS indicator information corresponds to at least one of uplink QoS flow, PDU session, PDU set, packet, sample, slice, tile, stream and frame, and corresponds to the uplink service. The third QoS indicator information corresponds to at least one of a downlink QoS flow, a PDU session, a PDU set, a packet, a sample, a slice, a tile, a stream and a frame, and corresponds to the downstream service.

Optionally, the resource status includes uplink and/or downlink resource status.

Optionally, the service control device 70 further includes:

a first evaluation module used to evaluate and obtain the fourth QoS indicator information and/or the fifth QoS indicator information of the first service according to the uplink and/or downlink resource status;
a first determination module used to determine the sixth QoS indicator information and/or the seventh QoS indicator information of the first service based on the fourth QoS indicator information and/or the fifth QoS indicator information.

Optionally, the service control device 70 further includes:

a second evaluation module used to evaluate and obtain the fourth QoS indicator information and/or the fifth QoS indicator information of the first service according to the uplink and/or downlink resource status;
a first updating module used to update the sixth QoS indicator information and/or the seventh QoS indicator information of the first service according to the fourth QoS indicator information and/or the fifth QoS indicator information.

Optionally, the first acquisition module 71 is further used to: obtain updated first information sent by the second network node or the UE.

The first sending module 72 is further used to send updated second information to the second network node and/or the UE.

Optionally, the service control device 70 further includes:

a first calculation module used to calculate a change value of the fourth QoS indicator information and/or a change value of the fifth QoS indicator information at a first moment according to the channel measurement result of the first network node, the channel measurement result reported by the UE and the success reception of packet;
a second update module used to, according to the change value of the fourth QoS indicator information, update the change value of the fifth QoS indicator information, or, according to the change value of the fifth QoS indicator information, update the change value of the fourth QoS indicator information.

Optionally, the service control device 70 further includes:
a second calculation module used to use the following formula 1 and formula 2 to obtain Duu-d and Duu-u:

$$\text{Formula 1: } Duu\text{-}d = (a * ULDL\text{-}RTT\text{-}Delay - Dser2cn\text{-}d - Dng\text{-}d * hop) - delta$$

$$\text{Formula 2: } Duu\text{-}u = ((1\text{-}a) * ULDL\text{-}RTT\text{-}Delay - Dser2cn\text{-}u - Dng\text{-}u * hop) + delta$$

Where the Duu-d is the downlink delay of the first service from the first network node to the UE; the Duu-u is the uplink delay of the first service from the UE to the first network node; the delta is a delay correction value obtained by evaluating the uplink and/or downlink resource status; the ULDL-RTT-Delay is the end-to-end round-trip transmission delay of the first service; the a is determined based on the first QoS indicator information; the Dser2cn-d is the downlink delay of the first service from the cloud to the second network node, the Dser2cn-u is the uplink delay of the first service from the second network node to the cloud; the Dng-d is the downlink delay of the first service from the second network node to the first network node; and the hop is the number of frequency hopping.

Optionally, the service control device 70 further includes:

a second obtaining module used to obtain a first channel measurement result of the first network node, and/or receive a second channel measurement result reported by the UE;
a second determination module used to determine the resource status according to at least one of the following: the first channel measurement result, the second channel measurement result, and the data reception success of the first network node.

Optionally, the first sending module 72 is further used to:
send second configuration information to the UE, where the second configuration information is used to configure at least two sets of resources for the UE; when the downlink service of the first service times out, send trigger information to the UE, where the trigger information is used to trigger the UE to use the first resource to perform the first service, and the first resource is the resource corresponding to the low-latency service in the at least two sets of resources.

Optionally, the first sending module 72 is further used to:
send third configuration information to the UE, where the third configuration information is used to configure an association between the uplink service and the downlink service of the first service.

Optionally, the association includes at least one of the following:

an association between logical information of the uplink service and logical information of the downlink service;
an association between uplink service session and downlink service session;
an association between the Data Radio Bearer (DRB) of the uplink service and the DRB of the downlink service;
an association between Radio Link Control (RLC) entity of the uplink service and the RLC entity of the downlink service;
host and slave relationship between the uplink service and the downlink service;
an association between uplink service resource and downlink service resource.

Optionally, the service control device 70 further includes:
a first execution module used to perform at least one of the following:

when the downlink service transmission of the first service fails, discard transmission resources and/or timer settings of the uplink service corresponding to the downlink service, and/or discard monitoring of transmission of the uplink service corresponding to the downlink service;
when the reception of the uplink service of the first service fails, discard transmission resources and/or timer settings of the downlink service corresponding to the uplink service.

The service control device 70 in the embodiment of the present application can implement each process of the above method embodiment shown in FIG. 1 and can achieve the same technical effect. To avoid duplication, the details will not be described here.

Referring to FIG. 8, FIG. 8 is a schematic diagram of a service control device according to an embodiment of the present application. The device is applied to a second network node. As shown in FIG. 8, the service control device 80 includes:

a third obtaining module 81 used to obtain or determine first QoS indicator information of the first service;
a second sending module 82 used to send to the first network node and/or UE, at least one of the following QoS indicator information: first QoS indicator information; second QoS indicator information; third QoS indicator information; fourth QoS indicator information; fifth QoS indicator information.

The first QoS indicator information includes QoS indicator information from the UE to the second network node and from the second network node to the UE. The second QoS indicator information includes QoS indicator information from the UE to the second network node. The third QoS indicator information includes QoS indicator information from the second network node to the UE. The fourth QoS indicator information includes QoS indicator information from the UE to the first network node. The fifth QoS indicator information includes QoS indicator information from the first network node to the UE.

Optionally, the service control device 80 further includes:

a first receiving module used to receive, from the first network node, a resource status of the first service between the UE and the first network node;
where the resource status includes at least one of the following: radio channel condition, data transmission and/or reception delay status, data transmission and/or reception success rate, data transmission and/or reception rate, jitter of data transmission, resolution of data transmission and/or reception, resolution of image transmission and/or reception, frame loss of data transmission and/or reception, frame loss of image transmission and/or reception.

The resource status includes uplink and/or downlink resource status.
Optionally, the service control device 80 further includes:

a third evaluation module used to evaluate and obtain the fourth QoS indicator information and/or the fifth QoS indicator information of the first service according to the uplink and/or downlink resource status;
a third determination module used to determine sixth QoS indicator information and/or seventh QoS indicator information of the first service based on the fourth QoS indicator information and/or the fifth QoS indicator information, or update the sixth QoS indicator information and/or the seventh QoS indicator information of the first service;
where the sixth QoS indicator information includes QoS indicator information from the first network node to the second network node; the seventh QoS indicator information includes QoS indicator information from the second network node to the first network node.

Optionally, the service control device 80 further includes:
a second receiving module used to receive, from the first network node, third information of the first service between the UE and the first network node, where the third information includes at least one of the following:
the fourth QoS performance information and/or the fifth QoS performance information of the first service.
The fourth QoS performance information is current QoS performance information from the UE to the first network node; the fifth QoS performance information is current QoS performance information from the first network to the UE.

The QoS performance information includes at least one of the following: rate, packet delay, PDU set delay, packet error rate, PDU-Set Error Rate (PSER), priority, jitter, throughput, resolution, frame loss rate; the QoS performance information is regarded as actual performance parameter in the network for at least one of each QoS flow, PDU session, PDU set, packet, sample, slice, tile, stream and frame.

Optionally, the service control device 80 further includes:
a second decomposition module is used for at least one of the following:

subtracting the fourth QoS indicator information and the fifth QoS indicator information obtained from the first network node from the first QoS indicator information, and decomposing sixth QoS indicator information and/or seventh QoS indicator information according to the resource status;
subtracting the fourth QoS performance information and the fifth QoS performance information obtained from the first network node from the first QoS indicator information, and decomposing the sixth QoS indicator information and/or the seventh QoS indicator information according to resource status.

The sixth QoS indicator information includes QoS indicator information from the first network node to the second network node; the seventh QoS indicator information includes QoS indicator information from the second network node to the first network node.

The service control device 80 in the embodiment of the present application can implement each process of the above method embodiment shown in FIG. 3 and can achieve the same technical effect. To avoid duplication, details will not be described here.

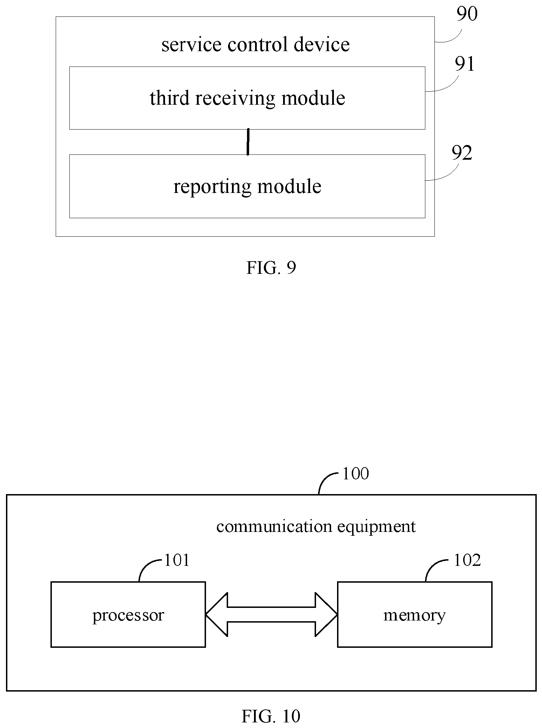

Referring to FIG. 9, FIG. 9 is a schematic diagram of a service control device according to an embodiment of the present application. The device is applied to a UE. As shown in FIG. 9, the service control device 90 includes:

a third receiving module 91 used to receive first configuration information from the first network node;
a reporting module 92 used to report fourth information to the first network node according to the first configuration information; where the fourth information is used to characterize the resource status between the UE and the first network node when performing the first service. The resource status may include at least one of the following: radio channel condition, data transmission and/or reception delay status, data transmission and/or reception success rate, data transmission and/or reception rate, jitter of data transmission, resolution of data transmission and/or reception, resolution of image transmission and/or reception, frame loss of data transmission and/or reception, frame loss of image transmission and/or reception.

Optionally, the service control device 90 further includes:
a first starting module used to, when the time for the UE to receive and/or send a packet of the first service is greater than a first threshold value and/or less than a second threshold value compared to a pre-configured packet delay, start to report the fourth information to the first network node according to the first configuration information.

Optionally, the third receiving module 91 is further used to:
receive second configuration information from the first network node, where the second configuration information is used to configure at least two sets of resources for the UE; when the downlink service of the first service times out, receive trigger information from the first network node, where the trigger information is used to trigger the UE to use the first resource to perform the first service, and the first resource is the resource corresponding to the low-latency service in the at least two sets of resources.

Optionally, the service control device 90 further includes:
a second starting module used to, if the time when the UE receives the downlink data of the first service is delayed beyond a predetermined time, initiate a low-latency configuration grant to send the uplink service of the first service.

Optionally, the third receiving module 91 is further used to:
receive third configuration information from the first network node, where the third configuration information is used to configure the association between the uplink service and the downlink service of the first service.

Optionally, the association includes at least one of the following:

an association between logical information of the uplink service and logical information of the downlink service;
an association between uplink service session and downlink service session;
an association between the Data Radio Bearer (DRB) of the uplink service and the DRB of the downlink service;
an association between Radio Link Control (RLC) entity of the uplink service and the RLC entity of the downlink service;
host and slave relationship between the uplink service and the downlink service;
an association between uplink service resource and downlink service resource.

Optionally, the service control device 90 further includes a second execution module used for at least one of the following:

when reception of the downlink service of the first service fails, ignoring transmission resources and/or timer settings of the uplink service corresponding to the downlink service;
when the uplink service transmission of the first service fails, ignoring monitoring of the transmission of the downlink service corresponding to the uplink service.

The service control device 90 in the embodiment of the present application can implement each process of the above method embodiment shown in FIG. 6 and can achieve the same technical effect. To avoid duplication, the details will not be described here.

Optionally, as shown in FIG. 10, one embodiment of the present application further provides a communication equipment 100, which includes a processor 101, a memory 102, and programs or instructions stored on the memory 102 and executable on the processor 101. The programs or instructions, when executed by the processor 101, cause the processor to perform each process of the above service control method embodiment, and the same technical effect can be achieved. To avoid duplication, the details will not be described here.

One embodiment of the present application further provides a readable storage medium including programs or instructions stored thereon. The programs or instructions, when executed by a processor, cause the processor to perform each process of the above service control method embodiment and the same technical effect can be achieved. To avoid duplication, the details will not be described here.

The readable storage medium includes permanent and non-permanent, removable and non-removable media, and can be used for information storage by any method or technology. Information may be computer-readable instructions, data structures, modules of programs, or other data. Examples of the computer storage medium include, but are not limited to, Phase-Change Random Access Memory (PRAM), Static Random-Access Memory (SRAM), and Dynamic Random Access Memory (DRAM), other types of random access memory (RAM), read-only memory (ROM), electrically erasable programmable read only memory (EEPROM), flash memory or other memory technology, Compact Disc Read-Only Memory (CD-ROM), Digital Video Disc (DVD) or other optical storage, magnetic tape cassettes, tape magnetic disk storage or other magnetic storage device or any other non-transmission medium that can be used to store information that can be accessed by a computing device. As defined in this article, the computer-readable media does not include transitory media, such as modulated data signals and carrier waves.

It should be noted that, in this document, the terms "comprising", "comprises" or any other variations thereof are intended to cover a non-exclusive inclusion, such that a process, method, article or device that includes a series of elements not only includes those elements, but also includes other elements not expressly listed or inherent in the process, method, article or device. Without further limitation, an element defined by the statement "comprises a..." does not exclude the presence of additional identical elements in a process, method, article or device that includes that element.

The above serial numbers of the embodiments of the present application are only for description and do not represent the advantages and disadvantages of the embodiments.

Through the description of the above embodiments, those skilled in the art can clearly understand that the above method embodiments can be implemented by means of software plus the necessary general hardware platform, and of course by hardware, but in many cases the former is a better implementation method. Based on this understanding, the technical solution of the present application, or the part that contributes to the relevant technology, can be embodied in the form of a software product, which is stored in a storage medium (such as ROM/RAM, disk, CD), and includes a number of instructions for enabling a service classification device (which can be a mobile phone, computer, server, air conditioner, or network device, etc.) to execute the methods described in each embodiment of the present application.

The above are only preferred embodiments of the present application. It should be pointed out that those skilled in the art can also make several improvements and modifications without departing from the principles of the present application. These improvements and modifications should also be regarded as the scope of protection of the present application.

**Claims**

1. A service control method, performed by a first network node, comprising:

obtaining first information of a first service sent by a second network node or a user equipment (UE); wherein the first information includes: first QoS indicator information, and/or second QoS indicator information and third QoS indicator information;
sending second information of the first service to the second network node and/or the UE;

wherein the second information includes at least one of the following: fourth QoS indicator information; fifth QoS indicator information; sixth QoS indicator information; and seventh QoS indicator information;

the first QoS indicator information includes QoS indicator information from the UE to the second network node and from the second network node to the UE; the second QoS indicator information includes QoS indicator information from the UE to the second network node; the third QoS indicator information includes QoS indicator information from the second network node to the UE; the fourth QoS indicator information includes QoS indicator information from the UE to the first network node; the fifth QoS indicator information includes QoS indicator information from the first network node to the UE; the sixth QoS indicator information includes QoS indicator information from the first network node to the second network node; the seventh QoS indicator information includes QoS indicator information from the second network node to the first network node.

2. The method according to claim 1, wherein the QoS indicator information includes at least one of the following: rate, packet delay, PDU set delay, packet error rate, PDU-set error Rate (PSER), priority, jitter, throughput, resolution, frame loss rate;

the QoS indicator information is regarded as a rule that sets parameters for at least one of each QoS flow, Protocol Data Unit (PDU) session, packet, flow, and frame.

3. The method according to claim 1, wherein

the first QoS indicator information is QoS indicator information corresponding to at least one of a QoS flow, a PDU session, a PDU set, packet, a sample, a slice, a tile, a stream, and a frame transmitted from the UE to the second network node, and at least one of a QoS flow, a PDU session, a PDU set, a packet, a sample, a slice, a tile, a stream, and a frame from the second network node to the UE;

the second QoS indicator information corresponds to at least one of a QoS flow, a PDU session, a PDU set, a packet, a sample, a slice, a tile, a stream, and a frame;

the third QoS indicator information corresponds to at least one of a QoS flow, a PDU session, a PDU set, a packet, a sample, a slice, a tile, a stream, and a frame;

the fourth QoS indicator information corresponds to at least one of a QoS flow, a PDU session, a PDU set, a packet, a sample, a slice, a tile, a stream, and a frame;

the fifth QoS indicator information corresponds to at least one of a QoS flow, a PDU session, a PDU set, a packet, a sample, a slice, a tile, a stream, and a frame;

the sixth QoS indicator information corresponds to at least one of a QoS flow, a PDU session, a PDU set, a packet, a sample, a slice, a tile, a stream, and a frame; and

the seventh QoS indicator information corresponds to at least one of a QoS flow, a PDU session, a PDU set, a packet, a sample, a slice, a tile, a stream, and a frame.

4. The method according to claim 1, wherein the method further includes:

obtaining a resource status of the first service between the UE and the first network node;

wherein the resource status includes at least one of the following: radio channel condition, data transmission and/or reception delay status, data transmission and/or reception success rate, data transmission and/or reception rate, jitter of data transmission, resolution of data transmission and/or reception, resolution of image transmission and/or reception, frame loss of data transmission and/or reception, frame loss of image transmission and/or reception.

5. The method according to claim 1, wherein the obtaining first information of a first service sent by a second network node or a user equipment (UE), includes:

obtaining sixth QoS performance information and/or seventh QoS performance information of the first service sent by the second network node or UE;

and/or,

obtaining sixth QoS indicator information and/or seventh QoS indicator information of the first service sent by the second network node or UE;

wherein the sixth QoS performance information is current QoS performance information from the first network node to the second network node; the seventh QoS performance information is current QoS performance information from the second network to the first network node;

the QoS performance information includes at least one of the following: rate, packet delay, PDU set delay, packet error rate, PDU-Set Error Rate (PSER), priority, jitter, throughput, resolution, frame loss rate; the QoS performance information is regarded as actual performance parameter in the network for at least one of each QoS flow, PDU session, PDU set, packet, sample, slice, tile, stream and frame.

6. The method according to claim 4, wherein the method further includes:

decomposing the second information according to the first information and the resource status;
and/or,
adjusting media encoding and/or decoding of the first service according to the first information and the resource status, and/or adjusting the rate of the first service.

7. The method according to claim 6, wherein the decomposing second information according to the first information and the resource status includes at least one of the following:

subtracting the sixth QoS indicator information and the seventh QoS indicator information obtained from the second network node from the first QoS indicator information, and decomposing the fourth QoS indicator information and/or fifth QoS indicator information according to the resource status;
subtracting the sixth QoS performance information and the seventh QoS performance information obtained from the second network node from the first QoS indicator information, and decomposing the fourth QoS indicator information and/or the fifth QoS indicator information according to resource status.

8. The method according to claim 6, wherein the decomposing second information according to the first information and the resource status includes at least one of the following:

subtracting the sixth QoS indicator information and the seventh QoS indicator information obtained from the second network node from the first QoS indicator information, and updating decomposed fourth QoS indicator information and/or fifth QoS indicator information according to the resource status;
subtracting the sixth QoS performance information and the seventh QoS performance information obtained from the second network node from the first QoS indicator information, and updating decomposed fourth QoS indicator information and/or the fifth QoS indicator information according to resource status.

9. The method according to claim 1, wherein the obtaining first information of a first service sent by a second network node or a user equipment (UE), includes:

obtaining second QoS indicator information and third QoS indicator information decomposed from the first service and sent by the second network node or the UE;
wherein the second QoS indicator information corresponds to at least one of an uplink QoS flow, a PDU session, a PDU set, a packet, a sample, a slice, a tile, a stream and a frame; the third QoS indicator information corresponds to at least one of a downlink QoS flow, a PDU session, a PDU set, a packet, a sample, a slice, a tile, a stream and a frame.

10. The method according to claim 4, wherein the resource status includes uplink and/or downlink resource status.

11. The method according to claim 10, wherein after obtaining first information of a first service sent by a second network node or a user equipment (UE), the method further includes:

evaluating and obtaining the fourth QoS indicator information and/or the fifth QoS indicator information of the first service based on the uplink and/or downlink resource status;
determining the sixth QoS indicator information and/or the seventh QoS indicator information of the first service according to the fourth QoS indicator information and/or the fifth QoS indicator information.

12. The method according to claim 10, wherein after obtaining first information of a first service sent by a second network node or a user equipment (UE), the method further includes:

evaluating and obtaining the fourth QoS indicator information and/or the fifth QoS indicator information of the first service based on the uplink and/or downlink resource status;
updating the sixth QoS indicator information and/or the seventh QoS indicator information of the first service according to the fourth QoS indicator information and/or the fifth QoS indicator information.

**13.** The method according to claim 1, wherein the method further includes:

obtaining updated first information sent by the second network node or UE;
sending updated second information to the second network node and/or the UE.

**14.** The method according to claim 1, wherein the method further includes:

calculating a change value of the fourth QoS indicator information and/or a change value of the fifth QoS indicator information at a first moment according to a channel measurement result of the first network node, a channel measurement result reported by the UE and a success reception of packet;
according to the change value of the fourth QoS indicator information, updating the change value of the fifth QoS indicator information, or, according to the change value of the fifth QoS indicator information, updating the change value of the fourth QoS indicator information.

**15.** The method according to claim 4, wherein after obtaining first information of a first service sent by a second network node or a user equipment (UE), the method further includes:

using the following formula 1 and formula 2 to obtain Duu-d and Duu-u:

$$\text{Formula 1: Duu-d}=(a*\text{ULDL-RTT-Delay-Dser2cn-d-Dng-d}*\text{hop})-\text{delta}$$

$$\text{Formula 2: Duu-u}=((1-a)*\text{ULDL-RTT-Delay-Dser2cn-u-Dng-u}*\text{hop})+\text{delta}$$

wherein the Duu-d is a downlink delay of the first service from the first network node to the UE; the Duu-u is an uplink delay of the first service from the UE to the first network node; the delta is a delay correction value obtained by evaluating the uplink and/or downlink resource status; the ULDL-RTT-Delay is the end-to-end round-trip transmission delay of the first service; the a is determined based on the first QoS indicator information; the Dser2cn-d is the downlink delay of the first service from the cloud to the second network node, the Dser2cn-u is the uplink delay of the first service from the second network node to the cloud; the Dng-d is the downlink delay of the first service from the second network node to the first network node; and the hop is the number of frequency hopping.

**16.** The method according to claim 4, wherein the obtaining a resource status of the first service between the UE and the first network node includes:

obtaining a first channel measurement result of the first network node, and/or receiving a second channel measurement result reported by the UE;
determining the resource status according to at least one of the following: the first channel measurement result, the second channel measurement result, and data reception success of the first network node.

**17.** The method according to claim 1, wherein the method further includes:

sending second configuration information to the UE, wherein the second configuration information is used to configure at least two sets of resources for the UE;
when the downlink service of the first service times out, sending trigger information to the UE, wherein the trigger information is used to trigger the UE to use a first resource to perform the first service, and the first resource is a resource corresponding to a low-latency service in the at least two sets of resources.

**18.** The method according to claim 1, wherein the method further includes:
sending third configuration information to the UE, wherein the third configuration information is used to configure association between the uplink service and the downlink service of the first service.

**19.** The method according to claim 18, wherein the association includes at least one of the following:

an association between logical information of the uplink service and logical information of the downlink service;
an association between uplink service session and downlink service session;
an association between the Data Radio Bearer (DRB) of the uplink service and the DRB of the downlink service;

an association between a Radio Link Control (RLC) entity of the uplink service and an RLC entity of the downlink service;

host and slave relationship between the uplink service and the downlink service;

an association between uplink service resource and downlink service resource.

20. The method according to claim 1, wherein the method further includes at least one of the following:

when downlink service transmission of the first service fails, discarding transmission resources and/or timer settings of the uplink service corresponding to the downlink service, and/or discarding monitoring of transmission of the uplink service corresponding to the downlink service

when reception of the uplink service of the first service fails, discarding transmission resources and/or timer settings of the downlink service corresponding to the uplink service.

21. A service control method, performed by a second network node, comprising:

obtaining or determining first QoS indicator information of the first service;

sending, to a first network node and/or UE, at least one of the following QoS indicator information: first QoS indicator information, second QoS indicator information, third QoS indicator information, fourth QoS indicator information, fifth QoS indicator information;

wherein the first QoS indicator information includes QoS indicator information from the UE to the second network node and from the second network node to the UE; the second QoS indicator information includes QoS indicator information from the UE to the second network node; the third QoS indicator information includes QoS indicator information from the second network node to the UE; the fourth QoS indicator information includes QoS indicator information from the UE to the first network node; the fifth QoS indicator information includes QoS indicator information from the first network node to the UE.

22. The method according to claim 21, wherein the method further includes:

receiving from the first network node, a resource status of the first service between the UE and the first network node;

wherein the resource status includes at least one of the following: radio channel condition, data transmission and/or reception delay status, data transmission and/or reception success rate, data transmission and/or reception rate, jitter of data transmission, resolution of data transmission and/or reception, resolution of image transmission and/or reception, frame loss of data transmission and/or reception, frame loss of image transmission and/or reception;

the resource status includes uplink and/or downlink resource status.

23. The method according to claim 22, wherein the method further includes:

evaluating and obtaining the fourth QoS indicator information and/or fifth QoS indicator information of the first service according to the uplink and/or downlink resource status;

determining a sixth QoS indicator information and/or a seventh QoS indicator information of the first service according to the fourth QoS indicator information and/or the fifth QoS indicator information, or updating the sixth QoS indicator information and/or the seventh QoS indicator information of the first service;

wherein the sixth QoS indicator information includes QoS indicator information from the first network node to the second network node; the seventh QoS indicator information includes QoS indicator information from the second network node to the first network node.

24. The method according to claim 22, wherein the method further includes:

receiving from the first network node, third information of the first service between the UE and the first network node, wherein the third information includes at least one of the following:

fourth QoS performance information and/or fifth QoS performance information of the first service;

wherein the fourth QoS performance information is current QoS performance information from the UE to the first network node; the fifth QoS performance information is current QoS performance information from the first network to the UE;

the QoS performance information includes at least one of the following: rate, packet delay, PDU set delay, packet error rate, PDU-Set Error Rate (PSER), priority, jitter, throughput, resolution, frame loss rate; the QoS performance information is regarded as actual performance parameter in the network for at least one of each QoS flow, PDU session, PDU set, packet, sample, slice, tile, stream and frame.

25. The method according to claim 24, wherein the method further includes at least one of the following:

subtracting the fourth QoS performance information and the fifth QoS performance information obtained from the first network node from the first QoS indicator information, and decomposing a sixth QoS indicator information and/or a seventh QoS indicator information according to the resource status;
subtracting the fourth QoS performance information and the fifth QoS performance information obtained from the first network node from the first QoS indicator information, and updating the decomposed sixth QoS indicator information and/or seventh QoS performance information according to the resource status;
wherein the sixth QoS indicator information includes QoS indicator information from the first network node to the second network node; the seventh QoS indicator information includes QoS indicator information from the second network node to the first network node.

26. A service control method, performed by a user equipment (UE), comprising:

receiving first configuration information from a first network node;
reporting fourth information to the first network node according to the first configuration information; wherein the fourth information is used to characterize a resource status between the UE and the first network node when performing the first service; the resource status includes at least one of the following: radio channel condition, data transmission and/or reception delay status, data transmission and/or reception success rate, data transmission and/or reception rate, jitter of data transmission, resolution of data transmission and/or reception, resolution of image transmission and/or reception, frame loss of data transmission and/or reception, frame loss of image transmission and/or reception.

27. The method according to claim 26, wherein the method further includes:
when the time for the UE to receive and/or send a packet of the first service is greater than a first threshold and/or less than a second threshold than a pre-configured packet delay, starting to report the fourth information to the first network node according to the first configuration information.

28. The method according to claim 26, wherein the method further includes:

receiving second configuration information from the first network node, wherein the second configuration information is used to configure at least two sets of resources for the UE;
when a downlink service of the first service times out, receiving trigger information from the first network node, wherein the trigger information is used to trigger the UE to use a first resource to perform the first service, the first resource is a resource corresponding to a low-latency service in the at least two sets of resources.

29. The method according to claim 26, wherein the method further includes:
when the time when the UE receives downlink data of the first service is delayed than predetermined time, starting a low-latency configuration grant to send an uplink service of the first service.

30. The method according to claim 26, wherein the method further includes:
receiving third configuration information from the first network node, wherein the third configuration information is used to configure association between uplink service and downlink service of the first service.

31. The method according to claim 30, wherein the association includes at least one of the following:

an association between logical information of the uplink service and logical information of the downlink service;
an association between uplink service session and downlink service session;
an association between the Data Radio Bearer (DRB) of the uplink service and the DRB of the downlink service;
an association between a Radio Link Control (RLC) entity of the uplink service and an RLC entity of the downlink service;
host and slave relationship between the uplink service and the downlink service;
an association between uplink service resource and downlink service resource.

32. The method according to claim 26, wherein the method further includes:

when reception of a downlink service of the first service fails, ignoring transmission resources and/or timer settings of an uplink service corresponding to the downlink service;

when an uplink service transmission of the first service fails, ignoring monitoring of transmission of the downlink service corresponding to the uplink service.

33. A service control device, applied to a first network node, comprising:

a first obtaining module configured to obtain first information of a first service sent by a second network node or a user equipment (UE); wherein the first information includes: first QoS indicator information, and/or second QoS indicator information and third QoS indicator information;

a first sending module configured to send second information of the first service to the second network node and/or the UE;

wherein the second information includes at least one of the following: fourth QoS indicator information; fifth QoS indicator information; sixth QoS indicator information; and seventh QoS indicator information;

the first QoS indicator information includes QoS indicator information from the UE to the second network node and from the second network node to the UE; the second QoS indicator information includes QoS indicator information from the UE to the second network node; the third QoS indicator information includes QoS indicator information from the second network node to the UE; the fourth QoS indicator information includes QoS indicator information from the UE to the first network node; the fifth QoS indicator information includes QoS indicator information from the first network node to the UE; the sixth QoS indicator information includes QoS indicator information from the first network node to the second network node; the seventh QoS indicator information includes QoS indicator information from the second network node to the first network node.

34. A service control device, applied to a second network node, comprising:

a third obtaining module configured to obtain or determine first QoS indicator information of the first service;

a second sending module configured to send, to a first network node and/or UE, at least one of the following QoS indicator information: first QoS indicator information, second QoS indicator information, third QoS indicator information, fourth QoS indicator information, fifth QoS indicator information;

wherein the first QoS indicator information includes QoS indicator information from the UE to the second network node and from the second network node to the UE; the second QoS indicator information includes QoS indicator information from the UE to the second network node; the third QoS indicator information includes QoS indicator information from the second network node to the UE; the fourth QoS indicator information includes QoS indicator information from the UE to the first network node; the fifth QoS indicator information includes QoS indicator information from the first network node to the UE.

35. A service control device, applied to a user equipment (UE), comprising:

a third receiving module configured to receive first configuration information from a first network node;

a reporting module configured to report fourth information to the first network node according to the first configuration information; wherein the fourth information is used to characterize a resource status between the UE and the first network node when performing the first service; the resource status includes at least one of the following:

radio channel condition, data transmission and/or reception delay status, data transmission and/or reception success rate, data transmission and/or reception rate, jitter of data transmission, resolution of data transmission and/or reception, resolution of image transmission and/or reception, frame loss of data transmission and/or reception, frame loss of image transmission and/or reception.

36. A communication equipment, comprising: a processor, a memory, and a program or instruction stored in the memory and executable on the processor; wherein the program or instruction, when executed by the processor, causes the processor to perform the steps of the service control method according to any one of claims 1 to 20, or the steps of the service control method according to any one of claims 21 to 25, or the steps of the service control method according to any one of claims 26 to 32.

37. A readable storage medium, comprising a program or instruction stored thereon; wherein the program or instruction, when executed by a processor, performs the steps of the service control method according to any one of claims 1 to 20, or the steps of the service control method according to any one of claims 21 to 25, or the steps of the service control method according to any one of claims 26 to 32.

obtaining first information of a first service sent by a second network node or a user equipment (UE)                                            11

sending second information of the first service to a second network node and/or UE                                            12

FIG. 1

cloud → Dser2cn-d → core network → Dng-d → base station → Duu-d → UE

uplink and downlink round trip latency

cloud ← Dser2cn-u ← core network ← Dng-u ← base station ← Duu-u ← UE

FIG. 2

obtaining or determining first QoS indicator information of the first service                                            31

sending, to the first network node and/or UE, at least one of the following QoS indicator information: first QoS indicator information, second QoS indicator information, third QoS indicator information, fourth QoS indicator information, fifth QoS indicator information                                            32

FIG. 3

| cloud processor | core network | | base station | UE |
|---|---|---|---|---|

401: transmit XR bidirectional service information, including end-to-end round-trip transmission delay requirement information

402: decompose XR service into two independent PDU sessions for uplink and downlink, and inform UE of end-to-end round-trip transmission delay requirement information and cloud-to-core network delay as well as delay from the core network to the base station

Uu uplink and downlink transmission delay evaluation

403: base station dynamically decomposes the end-to-end delay based on dynamic uplink and downlink resource status on the radio side

404: inform the core network of PDB from the base station to the core network (or base station to the cloud) and PDB from the base station to the UE for the uplink service decomposed by XR; and inform the core network of PDB from the base station to the core network (or base station to the cloud) and PDB from the base station to the UE for the downlink service decomposed by XR

Uu uplink and downlink transmission delay evaluation

405: perform uplink and downlink data scheduling respectively according to received PDB from the base station to the core network (or from the base station to the cloud)

406: base station updates dynamic decomposition of the end-to-end delay according to the dynamic uplink and downlink resource status changes on the radio side

407: update PDB from the base station to the core network (or the base station to the cloud) and PDB from the base station to the UE of the uplink service decomposed by the core network from XR; and update PDB from the base station to the core network (or the base station to the cloud) and PDB from the base station to the UE of the downlink service decomposed By the core network from XR

FIG. 4

| cloud processor | core network | | base station | UE |
|---|---|---|---|---|

501: transmit XR bidirectional service information, including end-to-end round-trip transmission delay requirement information

502: decompose XR service into two independent PDU sessions for uplink and downlink, and informs the base station of a primary decomposed PDB of Uu interface, and Uu uplink and downlink transmission delay evaluation obtaining request

503: perform uplink and downlink data scheduling respectively according to PDB of the Uu interface

504. Uu uplink and downlink transmission delay evaluation

505.Uu uplink and downlink transmission delay evaluation report

506: the core network element dynamically decomposes the end-to-end delay based on dynamic uplink and downlink resource status of the radio side dynamically reported by the base station

507: perform uplink and downlink data scheduling respectively according to PDB from the core network or the base station to the cloud

508. Uu uplink and downlink transmission delay evaluation

509.Uu uplink and downlink transmission delay evaluation report

510: the core network element dynamically decomposes the end-to-end delay based on the dynamic uplink and downlink resource status of the radio side dynamically reported by the base station

511: update the decomposed PDB of Uu interface

512: perform uplink and downlink data scheduling respectively according to PDB of the Uu interface

FIG. 5

receiving first configuration information from a first network node 61

reporting fourth information to the first network node according to the first configuration information 62

FIG. 6

service control device 70

first obtaining module 71

first sending module 72

FIG. 7

service control device 80

third obtaining module 81

second sending module 82

FIG. 8

90

service control device

91

third receiving module

92

reporting module

FIG. 9

100

communication equipment

101

processor

102

memory

FIG. 10

## INTERNATIONAL SEARCH REPORT

| International application No. |
| --- |
| **PCT/CN2023/110696** |

| A. | CLASSIFICATION OF SUBJECT MATTER |
| --- | --- |

H04W 28/24(2009.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP; IEEE: 接入网, 基站, 核心网, 终端, 质量, 时延, 延时, 上报, Radio Access Network, RAN, AN, PCF, SMF, AMF, UPF, UE, Qos, delay, RTT, report

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2021184263 A1 (GUANGDONG OPPO MOBILE TELECOMMUNICATIONS CORP., LTD.) 23 September 2021 (2021-09-23) description, page 2, line 20-page 12, line 6, and figures 1-12 | 1-25, 33-34, 36-37 |
| X | CN 112911628 A (CHINA TELECOM CORP., LTD.) 04 June 2021 (2021-06-04) description, paragraphs [0032]-[0069], and figures 1-8 | 26-32, 35, 36-37 |
| X | CN 109428842 A (HUAWEI TECHNOLOGIES CO., LTD.) 05 March 2019 (2019-03-05) description, paragraphs [0085]-[0195], and figures 1-12 | 1-25, 33-34, 36-37 |
| X | CN 106576094 A (HUAWEI TECHNOLOGIES CO., LTD.) 19 April 2017 (2017-04-19) description, pages 25-56, and figures 1-19 | 26-32, 35, 36-37 |
| A | CN 107889255 A (HUAWEI TECHNOLOGIES CO., LTD.) 06 April 2018 (2018-04-06) entire document | 1-37 |
| A | US 2022078662 A1 (TELEFONAKTIEBOLAGET LM ERICSSON (PUBL)) 10 March 2022 (2022-03-10) entire document | 1-37 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 October 2023** | **29 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/110696**

| Patent document cited in search report | | | Publication date (day/month/year) | Patent family member(s) | | | Publication date (day/month/year) |
|---|---|---|---|---|---|---|---|
| WO | 2021184263 | A1 | 23 September 2021 | CN | 116057912 | A | 02 May 2023 |
| CN | 112911628 | A | 04 June 2021 | CN | 112911628 | B | 02 May 2023 |
| CN | 109428842 | A | 05 March 2019 | | None | | |
| CN | 106576094 | A | 19 April 2017 | WO | 2016176857 | A1 | 10 November 2016 |
| CN | 107889255 | A | 06 April 2018 | WO | 2018059592 | A1 | 05 April 2018 |
| | | | | JP | 2019530363 | A | 17 October 2019 |
| | | | | JP | 7263234 | B2 | 24 April 2023 |
| | | | | CA | 3038862 | A1 | 05 April 2018 |
| | | | | CA | 3038862 | C | 29 November 2022 |
| | | | | BR | 112019006178 | A2 | 06 August 2019 |
| | | | | EP | 3518596 | A1 | 31 July 2019 |
| | | | | EP | 3518596 | A4 | 04 September 2019 |
| | | | | EP | 3518596 | B1 | 02 June 2021 |
| | | | | US | 2019230681 | A1 | 25 July 2019 |
| | | | | US | 10966222 | B2 | 30 March 2021 |
| US | 2022078662 | A1 | 10 March 2022 | WO | 2020148616 | A1 | 23 July 2020 |
| | | | | EP | 3912322 | A1 | 24 November 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210951519